# EUROPEAN PATENT APPLICATION

(11) **EP 4 593 484 A1**
(43) Date of publication of application: **30.07.2025**
(21) Application number: 23890700.0
(22) Date of filing: 10.11.2023
(51) Int. Cl.: H04W 72/02

(54) **RESOURCE INDICATION METHOD AND APPARATUS**

(30) Priority: 18.11.2022 CN 202211446632; 26.12.2022 CN 202211706355
(71) Applicant: Huawei Technologies Co., Ltd., Shenzhen, Guangdong 518129 (CN)
(72) Inventor: DUAN, Ruiyang, Shenzhen, Guangdong 518129 (CN); LI, Xueru, Shenzhen, Guangdong 518129 (CN)
(74) Representative: Maiwald GmbH
(86) International application number: PCT/CN2023/130959
(87) International publication number: WO 2024/104266

(57) **Abstract**

This application provides a resource indication method and an apparatus, to support a device that does not have capabilities of source and/or channel encoding/decoding and modulation/demodulation in indicating a sensing resource occupied or reserved by the device, and further support the device that does not have the capabilities of source and/or channel encoding/decoding and modulation/demodulation in learning of a resource occupied or reserved by another device, and then avoiding the occupied resource as much as possible during resource selection, to reduce resource conflicts and improve sensing performance. The method includes: A first communication device determines a first sensing resource. The first sensing resource includes a time domain resource and a frequency domain resource that are used to carry a first sensing signal. The first communication device sends a first sequence and the first sensing signal in a first time unit. At least one of a time domain location feature, a frequency domain location feature, or a code domain feature of the first sequence indicates the first sensing resource. After receiving the first sequence, a third communication device may determine a third sensing resource based on the first sensing resource indicated by the first sequence.

## Description

This application claims priority to Chinese Patent Application No. 202211446632.1, filed with the China National Intellectual Property Administration on November 18, 2022 and entitled "SENSING RESOURCE DETERMINING METHOD AND TERMINAL DEVICE", and Chinese Patent Application No. 202211706355.3, filed with the China National Intellectual Property Administration on December 26, 2022 and entitled "RESOURCE INDICATION METHOD AND APPARATUS", which are incorporated herein by reference in their entireties.

### TECHNICAL FIELD

Embodiments of this application relate to the communication field, and in particular, to a resource indication method and an apparatus.

### BACKGROUND

In a sidelink (sidelink, SL) introduced in a long term evolution (long term evolution, LTE) or new radio (new radio, NR) system, terminal devices may perform SL communication with each other through a PC5 interface.

In SL communication, a terminal device needs to send sidelink control information (sidelink control information, SCI) through a physical sidelink control channel (physical sidelink control channel, PSCCH), to indicate a communication resource occupied by the terminal device. Therefore, a terminal device may receive and parse SCI of another terminal device, to learn of communication resource occupation of the another terminal device. During resource selection, the terminal device may select a communication resource that is not occupied by the another terminal device, to avoid a resource conflict.

However, in many sensing scenarios (for example, an industrial application scenario) of the SL, due to a cost limitation, a terminal device is equipped with only a simple radar sensing module, rather than a communication module, that is, does not have capabilities of source and/or channel encoding/decoding and modulation/demodulation. Therefore, the terminal device cannot generate or send SCI to indicate a resource occupied by the terminal device, nor receive SCI from another terminal device to learn of resource occupation.

### SUMMARY

This application provides a resource indication method and an apparatus, to support a device that does not have capabilities of source and/or channel encoding/decoding and modulation/demodulation in indicating a sensing resource occupied or reserved by the device.

According to a first aspect, a signal sending method is provided. The method may be performed by a first communication device, or may be performed by a component of the first communication device, for example, a processor, a chip, or a chip system of the first communication device, or may be implemented by a logic module or software that can implement all or a part of functions of the first communication device. The method includes: The first communication device determines a first sensing resource. The first sensing resource includes a time domain resource and a frequency domain resource that are used to carry a first sensing signal. The first communication device sends a first sequence and the first sensing signal in a first time unit. At least one of a time domain location feature, a frequency domain location feature, or a code domain feature of the first sequence indicates the first sensing resource.

Based on this solution, the first communication device may send the first sequence, and indicate, by using at least one of the time domain location feature, the frequency domain location feature, or the code domain feature of the first sequence, the first sensing resource occupied (or reserved) by the first communication device. Because sequence sending does not require source and/or channel coding or modulation, the method can support a device that does not have capabilities of source and/or channel encoding/decoding and modulation/demodulation in indicating a resource occupied by the device. Therefore, the first communication device may not have the capabilities of source and/or channel encoding/decoding and modulation/demodulation. In addition, because source and/or channel coding and modulation are not performed when the sequence is sent, a receive end does not need to perform decoding or demodulation. Therefore, another communication device that does not have the capabilities of source and/or channel encoding/decoding and modulation/demodulation can learn, by detecting the sequence, of the resource occupied (or reserved) by the first communication device, and then avoid the occupied resource as much as possible during resource selection, to reduce resource conflicts and improve sensing performance. Therefore, based on the resource indication method, a device that does not have the capabilities of source and/or channel encoding/decoding and modulation/demodulation can be supported in indicating a resource occupied (or reserved) by the device, so that another device can learn of resource occupation, thereby reducing resource conflicts and improving sensing performance.

In a possible design, the first time unit includes X time subunits, and in the X time subunits: start X1 time subunits are used for automatic gain control AGC, a part of or all time subunits in X2 time subunits after the X1 time subunits are used to carry the first sequence, a part of or all time subunits in X3 time subunits after the X2 time subunits are used to carry the first sensing signal, X1+X2+X3≤X, X1, X2, and X3 are positive integers, and X is a positive integer greater than or equal to 3.

Based on the possible design, a feature of the first sequence carried in the X2 time subunits of the first time unit may indicate resource occupation in the X3 time subunits in the same time unit.

In a possible design, the X3 time subunits include N1 second time subunit groups, and N1 is a positive integer less than or equal to X3. The time domain resource used to carry the first sensing signal includes at least one of the N1 second time subunit groups.

Based on the possible design, the X3 time subunits are divided into time subunit groups, and a time domain location of the first sensing signal may be indicated by indicating a second time subunit group. Compared with indication performed by using a time subunit as a granularity, this can reduce complexity of indicating the time domain resource.

In a possible design, the first sensing resource is located in a sensing resource pool, the sensing resource pool includes M subchannels in frequency domain, and M is a positive integer greater than or equal to 1. The frequency domain resource used to carry the first sensing signal includes a part of or all resource elements REs of at least one of the M subchannels.

In a possible design, in the X3 time subunits, a plurality of REs of each of the M subchannels include K1 first RE groups, one first RE group includes REs that are evenly distributed based on a comb K1 in frequency domain, and K1 is a positive integer greater than or equal to 1. The frequency domain resource used to carry the first sensing signal includes at least one first RE group in the at least one subchannel.

Based on the possible design, a plurality of REs of each subchannel corresponding to X3 time subunit groups are divided into RE groups, and a comb and a resource element offset that are used by the first sensing signal may be indicated by indicating a first RE group. Compared with separately indicating the comb and the resource element offset, this can reduce indication complexity.

In a possible design, in a first time subunit group, each of the M subchannels includes at least N3 first areas, each first area includes at least K2*L REs, K2 is a comb used for the first sequence, L is a length of the first sequence, N3 is a positive integer greater than or equal to N1, and the first time subunit group includes the part of or all the time subunits that are used to carry the first sequence in the X2 time subunits. The frequency domain location feature of the first sequence includes an index of a first area in which the first sequence is located, or a quantity of times that the first sequence is repeatedly mapped in the at least N3 first areas, where a maximum quantity of times that the first sequence is mapped in one first area is 1.

In a possible design, an index of a second time subunit group in which the first sensing signal is located is the same as the index of the first area in which the first sequence is located; or the index of the second time subunit group in which the first sensing signal is located is the same as the quantity of times that the first sequence is repeatedly mapped in the N3 first areas.

Based on the possible design, a time domain location of the first sensing signal may be indicated by using the frequency domain location feature of the first sequence, thereby improving flexibility of indicating the time domain location.

In a possible design, the plurality of REs of each of the at least N3 first areas include K2 second RE groups, and one second RE group includes REs that are evenly distributed based on the comb K2 in frequency domain. The frequency domain location feature of the first sequence includes an index of a second RE group in which the first sequence is located.

In a possible design, an index of a first RE group in which the first sensing signal is located is the same as the index of the second RE group in which the first sequence is located.

Based on the possible design, the first RE group may be indicated by using the second RE group, to indicate a comb and a resource element offset that are used by the first sensing signal. Compared with separately indicating the comb and the resource element offset, this can reduce indication complexity.

In a possible design, the part of or all the time subunits that are used to carry the first sequence in the X2 time subunits include N2 third time subunit groups, and N2 is a positive integer less than or equal to X2. The time domain location feature of the first sequence includes an index of a third time subunit group in which the first sequence is located.

In a possible design, the index of the second time subunit group in which the first sensing signal is located is the same as the index of the third time subunit group in which the first sequence is located. Based on the possible design, a time domain location of the first sensing signal may be indicated by using the time domain location feature of the first sequence, so that implementation is easy.

In a possible design, the code domain feature of the first sequence indicates the second time subunit group in which the first sensing signal is located. Based on the possible design, a time domain location of the first sensing signal may be indicated by using the code domain feature of the first sequence, so that flexibility is high and implementation is easy.

In a possible design, the code domain feature of the first sequence includes at least one of the following: an index of the first sequence, an index of a sequence group in which the first sequence is located, an index of a base sequence for generating the first sequence, an index of a cyclic shift for generating the first sequence, or an index of an orthogonal cover code OCC for generating the first sequence.

In a possible design, the frequency domain location feature of the first sequence includes a subchannel on which the first sequence is located.

In a possible design, a subchannel on which the first sensing signal is located is the same as the subchannel on which the first sequence is located.

In a possible design, that the first device determines a first sensing resource includes: The first communication device receives a second sequence from a second communication device. At least one of a time domain location feature, a frequency domain location feature, or a code domain feature of the second sequence indicates a second sensing resource, and the second sensing resource includes a frequency domain resource and a time domain resource that are used to carry a second sensing signal. The first device determines the first sensing resource based on the second sensing resource.

According to a second aspect, a resource selection method is provided. The method may be performed by a third communication device, or may be performed by a component of the third communication device, for example, a processor, a chip, or a chip system of the third communication device, or may be implemented by a logic module or software that can implement all or a part of functions of the third communication device. The method includes: The third communication device receives a first sequence from a first communication device. At least one of a time domain location feature, a frequency domain location feature, or a code domain feature of the first sequence indicates a first sensing resource, and the first sensing resource includes a frequency domain resource and a time domain resource that are used to carry a first sensing signal. The third communication device determines a third sensing resource based on the first sensing resource. The third sensing resource includes a time domain resource and a frequency domain resource that are used to carry a third sensing signal.

Based on this solution, the third communication device receives the first sequence from the first communication device, and determines, by using at least one of the time domain location feature, the frequency domain location feature, or the code domain feature of the first sequence, the first sensing resource occupied (or reserved) by the first communication device. Because sequence sending does not require source and/or channel coding or modulation, the third communication device does not need to perform decoding or demodulation. Therefore, another communication device that does not have capabilities of source and/or channel encoding/decoding and modulation/demodulation can learn, by detecting the sequence, of the resource occupied (or reserved) by the first communication device, and then avoid the occupied resource as much as possible during resource selection, to reduce resource conflicts and improve sensing performance. Therefore, based on the resource indication method, a device that does not have the capabilities of source and/or channel encoding/decoding and modulation/demodulation is supported in learning of resource occupation (or reservation) of another communication device, and then avoiding the occupied resource as much as possible during resource selection, to reduce resource conflicts and improve sensing performance.

In a possible design, the method further includes: The third communication device sends a third sequence and the third sensing signal in a second time unit. At least one of a time domain location feature, a frequency domain location feature, or a code domain feature of the third sequence indicates the third sensing resource.

In a possible design, the third sensing resource does not overlap the first sensing resource.

According to a third aspect, a communication apparatus is provided, to implement the foregoing methods. The communication apparatus may be the first communication device in the first aspect, or an apparatus included in the first communication device, for example, a chip. Alternatively, the communication apparatus may be the third communication device in the second aspect, or an apparatus included in the third communication device, for example, a chip.

The communication apparatus includes a corresponding module, unit, or means (means) for implementing the foregoing methods. The module, unit, or means may be implemented by hardware, software, or hardware executing corresponding software. The hardware or software includes one or more modules or units corresponding to the foregoing functions.

In some possible designs, the communication apparatus may include a processing module and a transceiver module. The transceiver module may include a sending module and a receiving module, which are respectively configured to implement sending type and receiving type functions in any one of the foregoing aspects and the possible designs thereof. The processing module may be configured to implement a processing function in any one of the foregoing aspects and the possible designs thereof.

According to a fourth aspect, a communication apparatus is provided, including at least one processor. The processor is configured to enable, by executing computer instructions stored in a memory or by using a logic circuit, the communication apparatus to perform the method in any one of the foregoing aspects. The communication apparatus may be the first communication device in the first aspect, or an apparatus included in the first communication device, for example, a chip. Alternatively, the communication apparatus may be the third communication device in the second aspect, or an apparatus included in the third communication device, for example, a chip.

In some possible designs, the communication apparatus further includes the memory, configured to store the computer instructions and/or a configuration file of the logic circuit. Optionally, the memory and the processor are integrated together, or the memory is independent of the processor.

According to a fifth aspect, a communication apparatus is provided, including a processor and a communication interface. The communication interface is configured to input and/or output a signal. The processor is configured to execute a computer program or instructions, to enable the communication apparatus to perform the method in any one of the foregoing aspects. The communication apparatus may be the first communication device in the first aspect, or an apparatus included in the first communication device, for example, a chip. Alternatively, the communication apparatus may be the third communication device in the second aspect, or an apparatus included in the third communication device, for example, a chip.

In some possible designs, the communication interface is an interface circuit, and is configured to read and write computer instructions. For example, the interface circuit is configured to receive computer-executable instructions (the computer-executable instructions are stored in a memory, and may be read from the memory directly or via another component), and transmit the computer-executable instructions to the processor.

In some possible designs, the communication interface is configured to communicate with a module outside the communication apparatus.

In some possible designs, the communication apparatus may be a chip or a chip system. When the apparatus is a chip system, the chip system may include a chip, or may include a chip and another discrete component.

According to a sixth aspect, a communication apparatus is provided, including a logic circuit and an interface circuit. The interface circuit is configured to input and/or output information. The logic circuit is configured to perform processing based on the input information and/or generate the output information, to perform the method in any one of the foregoing aspects. The communication apparatus may be the first communication device in the first aspect, or an apparatus included in the first communication device, for example, a chip. Alternatively, the communication apparatus may be the third communication device in the second aspect, or an apparatus included in the third communication device, for example, a chip.

According to a seventh aspect, a computer-readable storage medium is provided. The computer-readable storage medium stores a computer program or instructions, and when the computer program or the instructions are executed by a processor, the method in any one of the foregoing aspects is performed.

According to an eighth aspect, a computer program product is provided. When the computer program product is executed by a processor, the method in any one of the foregoing aspects is performed.

It may be understood that when the communication apparatus provided in any one of the third aspect to the eighth aspect is a chip, the sending action/function may be understood as outputting information, and the receiving action/function may be understood as inputting information.

For technical effects brought by any design manner of the third aspect to the eighth aspect, refer to technical effects brought by different design manners of the first aspect or the second aspect. Details are not described herein again.

According to a ninth aspect, a communication system is provided. The communication system includes the first communication device in the first aspect and the third communication device in the second aspect.

### BRIEF DESCRIPTION OF DRAWINGS

FIG. 1 is a diagram of a slot structure in SL communication according to this application;
FIG. 2 is a diagram of a slot structure in SL positioning according to this application;
FIG. 3 is a diagram of a structure of a communication system according to this application;
FIG. 4a is a diagram of a structure of a communication apparatus according to this application;
FIG. 4b is a diagram of a structure of another communication apparatus according to this application;
FIG. 4c is a diagram of a structure of still another communication apparatus according to this application;
FIG. 5 is a schematic flowchart of a resource indication method according to this application;
FIG. 6 is a diagram of a structure of a time unit according to this application;
FIG. 7 is a diagram of time division multiplexing in a time unit according to this application;
FIG. 8 is a diagram of frequency division multiplexing in a time unit according to this application;
FIG. 9 is a diagram of comb frequency division multiplexing in a time unit according to this application;
FIG. 10 is a diagram of time division multiplexing, frequency division multiplexing, and comb frequency division multiplexing in a time unit according to this application;
FIG. 11 is a diagram of a mapping relationship between a sequence feature and a sensing resource according to this application;
FIG. 12 is a diagram of a mapping relationship between a sequence feature and a sensing resource according to this application;
FIG. 13 is a diagram of a mapping relationship between a sequence feature and a sensing resource according to this application;
FIG. 14 is a diagram of a mapping relationship between a sequence feature and a sensing resource according to this application;
FIG. 15 is a diagram of a mapping relationship between a sequence feature and a sensing resource according to this application;
FIG. 16 is a schematic flowchart of another resource indication method according to this application;
FIG. 17 is a diagram of a location of a sensing resource according to this application;
FIG. 18 is a diagram of a mapping relationship between a sequence feature and a sensing resource according to this application; and
FIG. 19 is a diagram of a structure of yet another communication apparatus according to this application.

### DESCRIPTION OF EMBODIMENTS

Unless otherwise specified, "/" in descriptions of this application represents an "or" relationship between associated objects. For example, A/B may represent A or B. In this application, "and/or" merely describes an association relationship between associated objects, and represents that three relationships may exist. For example, A and/or B may represent the following three cases: Only A exists, both A and B exist, and only B exists. A and B may be singular or plural.

In addition, in descriptions of this application, unless otherwise specified, "a plurality of" means two or more than two, and "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that provide basically same functions or effects. A person skilled in the art may understand that the words such as "first" and "second" do not limit a quantity or an execution order, nor indicate a definite difference.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that, an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean a specific execution order in embodiments of this application. An execution order of the processes should be determined based on functions and internal logic of the processes, and should not be construed as any limitation on implementation processes of embodiments of this application.

It may be understood that, in this application, both "when" and "if" mean that corresponding processing is performed in an objective situation, which are not intended to limit time, nor require a determining action during implementation, or mean any other limitation.

It may be understood that, some optional features in embodiments of this application may be independently implemented in some scenarios without depending on another feature, for example, a solution on which the features are currently based, to resolve a corresponding technical problem and achieve a corresponding effect; or may be combined with another feature based on a requirement in some scenarios. Correspondingly, an apparatus provided in embodiments of this application may correspondingly implement these features or functions. Details are not described herein.

In this application, unless otherwise specified, for same or similar parts of embodiments, refer to each other. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application do not constitute a limitation on the protection scope of this application.

To support direct communication between terminal devices, an SL communication manner is introduced in systems such as LTE and NR. In an SL, terminal devices may communicate with each other through a PC5 interface.

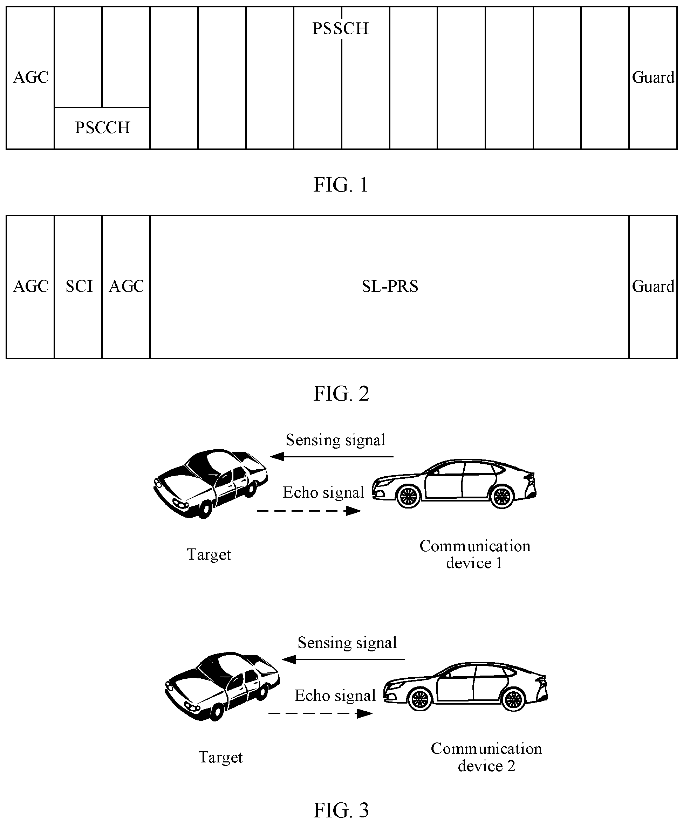

Currently, a typical slot structure defined in an SL protocol for a communication scenario may be shown in FIG. 1. With reference to FIG. 1, in time domain, the slot includes 14 symbols.

A start symbol is used to transmit automatic gain control (automatic gain control, AGC) information. An end symbol is used as a guard symbol (guard symbol). A part of bandwidth on two or three symbols after the start symbol is used as a PSCCH for transmitting SCI. Remaining bandwidth on the two or three symbols after the start symbol and all bandwidth on remaining symbols are used as a physical sidelink shared channel (physical sidelink shared channel, PSSCH) for transmitting communication data. A quantity of symbols and a size of bandwidth that are occupied by the PSCCH may be configured by a higher layer.

In a communication scenario, a terminal device may indicate, by using the SCI carried on the PSCCH, a communication resource occupied by the terminal device. For example, the SCI needs to indicate at least information such as a frequency domain resource and a time domain resource that are occupied by the communication data, a resource reservation periodicity, and a priority of the communication data. The information is configured based on different higher-layer parameters, and is indicated by using different quantities of bits in the SCI.

When a terminal device needs to transmit communication data, the terminal device senses resource occupation in a resource pool. For example, the terminal device may sense resource occupation in a current slot and resource reservation in a future slot by receiving SCI sent by another terminal device. Then, a resource that is not occupied or reserved may be selected based on the sensed resource occupation to transmit the data.

Therefore, when the SCI is used for resource indication, the terminal device needs to have a codec module and a modem module for communication, so that bits transmitted in the SCI can be mapped to specific resource occupation. If the terminal device does not have the codec module or the modem module, the terminal device cannot parse SCI of another terminal device, nor send SCI to indicate resource occupation and reservation of the terminal device.

In addition, in SL positioning research of NR release 18 (release 18, R18), a terminal device is allowed to transmit an SL-positioning reference signal (positioning reference signal, PRS) by using a time-frequency resource in the SL. In this scenario, the resource occupied by the SL-PRS also needs to be indicated.

In current discussion of R18, for SL positioning, resource occupation is still indicated by using SCI. Therefore, a slot structure in SL positioning may be shown in FIG. 2. With reference to FIG. 2, the slot includes two symbols for transmitting AGC, one symbol for transmitting SCI, one guard symbol, and several symbols for transmitting an SL-PRS.

Therefore, in SL positioning, a resource for transmitting the SL-PRS is still indicated by using the SCI. The SCI may indicate different information as compared with SCI in SL communication. However, this indication manner still requires a terminal device to have a codec module and a modem module for communication.

In addition, to support SL sensing, the terminal device may send a sensing signal (or referred to as a sensing reference signal) by using a time-frequency resource in the SL. Then, an echo signal of the sensing signal may be received, and comparison processing may be performed between the echo signal and the sensing signal, to sense information such as a distance and a speed of a target.

To avoid a conflict as much as possible when different terminal devices select a resource, the resource occupied by the sensing signal also needs to be indicated in SL sensing. However, in many sensing scenarios (for example, an industrial application scenario), due to a cost limitation, a terminal device may be equipped with only a simple radar sensing module, rather than a codec module and a modem module. Therefore, the terminal device does not have functions of source and/or channel encoding/decoding and modulation/demodulation. As a result, such a terminal device cannot learn of resource occupation by receiving SCI of another terminal device, nor generate or send SCI to indicate a resource occupied by the terminal device.

Based on this, this application provides a resource indication method, where a transmit end may send a sequence, to indicate, by using at least one of a time domain location feature, a frequency domain location feature, or a code domain feature of the sequence, a sensing resource occupied (or reserved) by the transmit end. Because sequence sending does not require source and/or channel coding or modulation, the method can support a device that does not have the capabilities of source and/or channel encoding/decoding and modulation/demodulation in indicating a resource occupied by the device. In addition, because source and/or channel coding and modulation are not performed when the sequence is sent, a receive end does not need to perform decoding or demodulation. Therefore, another device that does not have the capabilities of source and/or channel encoding/decoding and modulation/demodulation can learn, by detecting the sequence, of the resource occupied by the transmit end, and then avoid the occupied resource as much as possible during resource selection, to reduce resource conflicts and improve sensing performance.

Therefore, based on the resource indication method provided in this application, a device that does not have the capabilities of source and/or channel encoding/decoding and modulation/demodulation can be supported in indicating a resource occupied by the device, so that another device can learn of resource occupation, thereby reducing resource conflicts and improving sensing performance.

The technical solution in embodiments of this application may be applied to various communication systems. The communication system may be a 3rd generation partnership project (3rd generation partnership project, 3GPP) communication system, for example, a 5th generation (5th generation, 5G) or 6th generation (sixth generation, 6G) mobile communication system, an SL system, an ultra-wideband (ultra-wideband, UWB) system, a vehicle-to-everything (vehicle-to-everything, V2X) system, a device-to-device (device-to-device, D2D) communication system, a machine-to-machine (machine-to-machine, M2M) communication system, an internet of things (internet of things, IoT), and other next-generation communication systems. Alternatively, the communication system may be a non-3GPP communication system, for example, a wireless local area network (wireless local area network, WLAN) system such as Wi-Fi. This is not limited.

The technical solution in embodiments of this application may be applied to various communication scenarios, for example, may be applied to one or more of the following communication scenarios: smart home, D2D, V2X, IoT, and other communication scenarios.

The foregoing communication systems and the communication scenarios applicable to this application are merely examples for description, and communication systems and the communication scenarios applicable to this application are not limited thereto. This is stated herein once for all, and is not repeated below.

FIG. 3 shows a communication system according to an embodiment of this application. The communication system includes at least one communication device. The following embodiments of this application are described by using an example that the at least one communication device includes a first communication device, a second communication device, and a third communication device.

Optionally, the communication device has a radar sensing function, and may be used as a transmit end of a sensing signal and a receive end of a sensing signal. For example, the communication device may be used as a transmit end and a receive end in a monostatic sensing scenario, or may be used as a transmit end or a receive end in a bistatic scenario.

For example, as shown in FIG. 3, in the monostatic scenario, the communication device may send a sensing signal, and receive an echo signal of the sensing signal reflected by a target, to sense the target.

Optionally, the communication device in this application may be a terminal device. For example, the solution provided in embodiments of this application is applicable to a scenario in which the terminal device performs sensing in an SL.

Optionally, the terminal device may be a user-side device having a wireless transceiver function. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a wireless terminal in IoT, V2X, D2D, M2M, a 5G network, or a future evolved public land mobile network (public land mobile network, PLMN). The terminal device may be deployed on land, including indoor, outdoor, handheld, or in-vehicle forms, or may be deployed on a water surface (such as a ship), or may be deployed in air (for example, on an airplane, a balloon, or a satellite).

For example, the terminal device may be a reduced capability (reduced capability, RedCap) UE, a narrowband terminal, an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, or an in-vehicle device, a wearable device (which may also be referred to as a wearable smart device), a tablet computer or a computer with a wireless transceiver function, a virtual reality (virtual reality, VR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a vehicle with a vehicle-to-vehicle (vehicle-to-vehicle, V2V) communication capability, an intelligent connected vehicle, or an uncrewed aerial vehicle with a UAV-to-UAV (UAV-to-UAV, U2U) communication capability. The terminal may be mobile or fixed. This is not specifically limited in this application.

A related function of the communication device in this application may be implemented by one device, or may be jointly implemented by a plurality of devices, or may be implemented by one or more functional modules in one device, or may be implemented by one or more chips, or may be implemented by a system-on-chip (system-on-chip, SOC) or a chip system. The chip system may include a chip, or may include a chip and another discrete component. This is not specifically limited in this embodiment of this application.

It may be understood that the function may be a network element in a hardware device, a software function running on dedicated hardware, a combination of hardware and software, or a virtualization function instantiated on a platform (for example, a cloud platform).

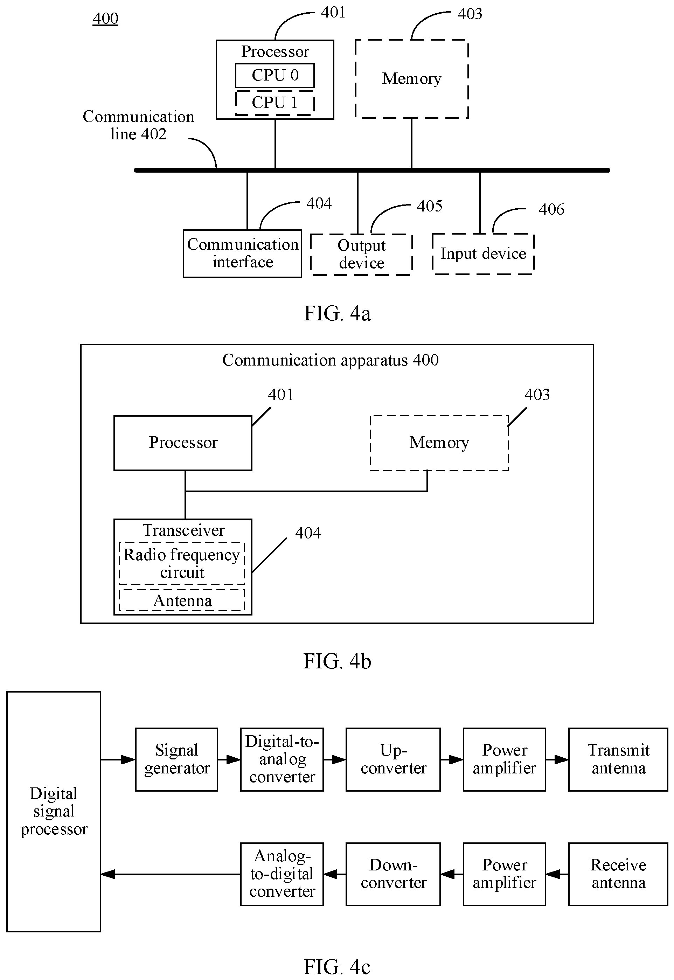

For example, the related function of the communication device in this application may be implemented by using a communication apparatus 400 in FIG. 4a. FIG. 4a is a diagram of a structure of a communication apparatus 400 according to an embodiment of this application. The communication apparatus 400 includes one or more processors 401 and at least one communication interface 404 (FIG. 4a merely shows an example of including one communication interface 404 and one processor 401 for description), and optionally, may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solution in this application.

During specific implementation, in an embodiment, the processor 401 may include one or more CPUs, for example, a CPU 0 and a CPU 1 in FIG. 4a.

During specific implementation, in an embodiment, the processor 401 may be a single-core (single-core) processor, or may be a multi-core (multi-core) processor. The processor herein may include but is not limited to at least one of the following computing devices that run software: a CPU, a microprocessor, a digital signal processor, a microcontroller (microcontroller unit, MCU), or an artificial intelligence processor. Each computing device may include one or more cores for executing software instructions to perform an operation or processing.

The communication line 402 may be used for communication between different components included in the communication apparatus 400.

The communication interface 404 may be an apparatus such as a transceiver or a transceiver machine, or may be an input/output interface. Alternatively, the communication interface 404 may be a transceiver circuit located in the processor 401, to implement signal input and signal output of the processor.

The memory 403 may be an apparatus having a storage function, for example, may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, and a blue-ray disc, or the like), a magnetic disk storage medium or another magnetic storage device, or any other medium that can be used to carry or store expected program code in an instruction or data structure form and that can be accessed by a computer. The memory may exist independently, and is connected to the processor by using the communication line 402. Alternatively, the memory may be integrated with the processor.

Optionally, the memory 403 may be configured to store computer-executable instructions for executing the solution of this application, and the execution is controlled by the processor 401, to implement the method provided in embodiments of this application.

Alternatively, optionally, in embodiments of this application, the processor 401 may perform a processing related function in the method provided in the following embodiments of this application, and the communication interface 404 is responsible for a receiving and sending related function in the method provided in the following embodiments of this application. This is not specifically limited in embodiments of this application.

Optionally, the computer-executable instructions in this embodiment of this application may also be referred to as application program code. This is not specifically limited in this embodiment of this application.

During specific implementation, in an embodiment, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive input of a user in a plurality of manners. For example, the input device 406 may be a mouse, a keyboard, a touchscreen device, or a sensor device.

For example, the communication interface 404 is a transceiver. FIG. 4b is a diagram of a structure of another communication apparatus 400 according to an embodiment of this application. The communication apparatus 400 includes a processor 401 and a transceiver 404. FIG. 4b shows only main components of the communication apparatus 400. In addition to the processor 401 and the transceiver 404, the communication apparatus may further include a memory 403 and an input/output apparatus (not shown in the figure).

The processor 401 is mainly configured to: process a communication protocol and communication data, control the entire communication apparatus, execute a software program, and process data of the software program. The memory 403 is mainly configured to store the software program and data. The transceiver 404 may include a radio frequency circuit and an antenna. The radio frequency circuit is mainly configured to perform conversion between a baseband signal and a radio frequency signal and process the radio frequency signal. The antenna is mainly configured to receive and send radio frequency signals in an electromagnetic wave form.

After the communication apparatus is powered on, the processor 401 may read the software program in the memory 403, interpret and execute instructions of the software program, and process data of the software program. When data needs to be sent wirelessly, the processor 401 performs baseband processing on the to-be-sent data, and then outputs a baseband signal to the radio frequency circuit. The radio frequency circuit performs radio frequency processing on the baseband signal, and then sends a radio frequency signal in an electromagnetic wave form by using the antenna. When data is sent to the communication apparatus, the radio frequency circuit receives a radio frequency signal by using the antenna, converts the radio frequency signal into a baseband signal, and outputs the baseband signal to the processor 401. The processor 401 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

For example, as shown in FIG. 4c, the processor 401 in FIG. 4b may include a digital signal processor, a signal generator, a digital-to-analog converter, or an analog-to-digital converter. A radio frequency circuit configured to send a signal may include an up-converter and a power amplifier, and a radio frequency circuit configured to receive a signal may include a down-converter and a power amplifier. The antenna may include a transmit antenna and a receive antenna.

In a possible implementation, the signal generator may be configured to generate a signal. The up-converter and the down-converter are respectively configured to modulate a signal to a high-frequency carrier and demodulate a signal from a high-frequency carrier. The power amplifier is configured to amplify power of a signal. The digital-to-analog converter is configured to convert a digital signal into an analog signal. The analog-to-digital converter is configured to convert an analog signal into a digital signal. The digital signal processor is configured to generate a sequence and perform an auto-correlation and/or cross-correlation operation and the like.

It should be noted that the composition structure shown in FIG. 4a, FIG. 4b, or FIG. 4c does not constitute any limitation on the communication apparatus. In addition to the components shown in FIG. 4a, FIG. 4b, or FIG. 4c, the communication apparatus may include more or fewer components than those shown in the figure, or combine some components, or have different component arrangements. The components shown in the figure may be implemented by hardware, software, or a combination of software and hardware.

The following describes, with reference to accompanying drawings, the method provided in this application. In embodiments of this application, a communication device may perform a part of or all steps in embodiments of this application. These steps or operations are merely examples. In embodiments of this application, other operations or variations of the operations may be performed. In addition, the steps may be performed in an order different from those presented in embodiments of this application, and not all operations in embodiments of this application need to be performed.

For example, the resource indication method provided in this application may be applied to a sensing scenario. Certainly, the method may also be applied to a sensing related scenario or a sensing derived scenario. An application scenario is not specifically limited in this application. The application scenario example does not constitute any limitation on the solution of this application.

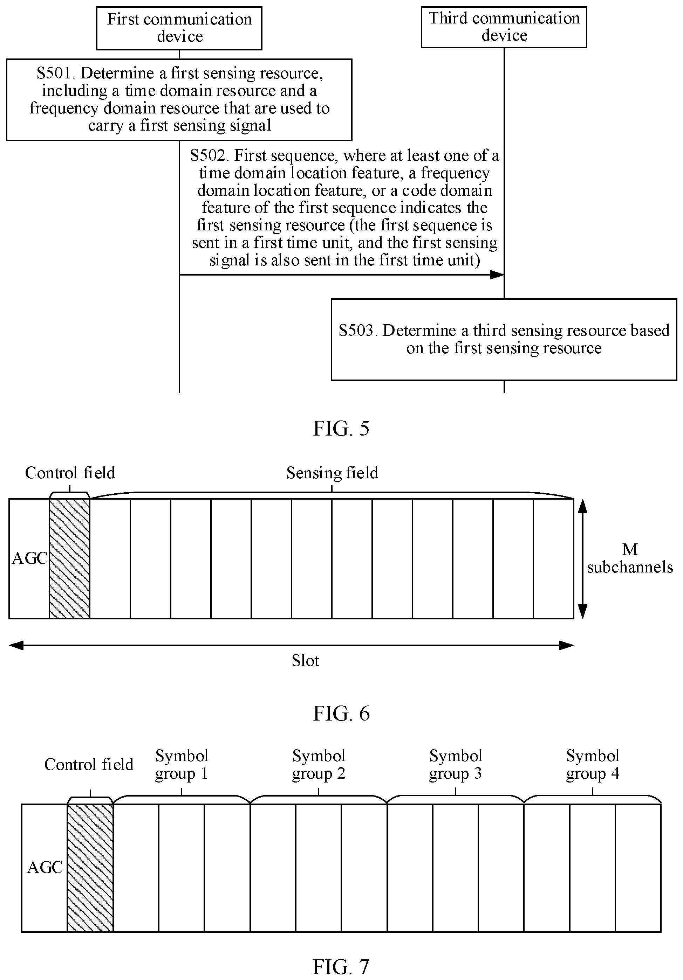

FIG. 5 is a schematic flowchart of a resource indication method according to this application. With reference to FIG. 5, the resource indication method includes the following steps.

S501. A first communication device determines a first sensing resource.

The first sensing resource includes a time domain resource and a frequency domain resource that are used to carry a first sensing signal. For example, the first sensing signal is a sensing signal to be sent by the first communication device.

Optionally, the time domain resource used to carry the first sensing signal may also be referred to as a time domain resource occupied by the first sensing signal or in which the first sensing signal is located, or a time domain resource of the first sensing resource. The frequency domain resource used to carry the first sensing signal may also be referred to as a frequency domain resource occupied by the first sensing signal or in which the first sensing signal is located, or a frequency domain resource of the first sensing resource.

Optionally, the first sensing resource may be located in a sensing resource pool. The sensing resource pool may be a resource pool dedicated to sensing, that is, the sensing resource pool includes independent channel and slot resources dedicated to transmitting a sensing signal. Alternatively, the sensing resource pool may be a resource pool shared by sensing and communication, and a communication device may transmit a sensing signal by using a PSSCH.

Optionally, the sensing resource pool may include M subchannels in frequency domain. M is a positive integer greater than or equal to 1. Each of the M subchannels may include a plurality of resource elements (resource element, RE).

Optionally, the sensing resource pool may include at least one time unit in time domain. For example, the time unit may be a slot, a mini-slot, a subframe, or a frame. This is not specifically limited in this application.

Optionally, one time unit may include X time subunits. X is a positive integer greater than or equal to 3. For example, the time subunit may be a symbol, and the symbol may be, for example, an orthogonal frequency division multiplexing (orthogonal frequency division multiplexing, OFDM) symbol, a discrete fourier transform spread orthogonal frequency division multiplexing (discrete fourier transform spread orthogonal frequency division multiplexing, DFT-s-OFDM) symbol, a single-carrier orthogonal frequency division multiplexing (single-carrier orthogonal frequency division multiplexing, SC-OFDM) symbol, or an orthogonal time-frequency space (orthogonal time-frequency space, OTFS) symbol. Alternatively, when the time unit is a subframe or a frame, the time subunit may be a slot, a mini-slot, or the like. This is not specifically limited in this application.

Optionally, in X time subunits included in one time unit, start X1 time subunits are used for AGC, or in other words, are used to carry AGC information. X2 time subunits after the start X1 time subunits are used to carry or transmit an indication sequence, and the indication sequence indicates resource occupation or reservation. X3 time subunits after the X2 time subunits are used to carry or transmit a sensing signal. X1+X2+X3≤X, and X1, X2, and X3 are positive integers.

For example, the start X1 time subunits may also be referred to as AGC time subunits or an AGC field. The X2 time subunits may be collectively referred to as a control field. The X3 time subunits may be collectively referred to as a sensing field. In other words, one time unit may include an AGC field, a control field, and a sensing field.

Optionally, that the start X1 time subunits are used for AGC may be understood as follows: The start X1 time subunits are used by a receiver to perform gain control in the control field.

Optionally, there may be at least one time subunit between an end time subunit of the AGC field and the first time subunit of the control field, or there may be no other time subunit (that is, the two are consecutive time subunits). There may be at least one time subunit between an end time subunit of the control field and the first time subunit of the sensing field, or there may be no other time subunit. This is not specifically limited in this application.

In a possible implementation, in a monostatic scenario, there may be no other time subunit between the end time subunit of the AGC field and the first time subunit of the control field, and between the end time subunit of the control field and the first time subunit of the sensing field. For example, the time unit is a slot, the time subunit is a symbol, X=14, X1=1, X2=1, and X3=12. A slot structure may be shown in FIG. 6. To be specific, a start symbol in the slot is used for AGC, one symbol after the start symbol is used to carry or transmit an indication sequence, and remaining symbols are used to carry or transmit a sensing signal.

Optionally, in the monostatic scenario, a gain of the sensing field may be adjusted by a transmitter based on historical measurement information. For example, the historical measurement information may be a measured value of signal received quality or signal received strength in a sensing field of a time unit before a current time unit.

In another possible implementation, in a bistatic scenario, there may be at least one time subunit between the end time subunit of the control field and the first time subunit of the sensing field, and the at least one time subunit may be used by a receiver to perform automatic gain control in the sensing field.

Optionally, in the bistatic scenario, in one time unit, at least one time subunit may be further included after a sensing field, and the at least one time subunit may be used as a guard interval.

Optionally, the sensing field supports time division multiplexing, frequency division multiplexing, and comb frequency division multiplexing performed by a plurality of communication devices.

Optionally, in time division multiplexing, the sensing field may be divided into a plurality of time subunit groups, and different communication devices may occupy different time subunit groups to transmit sensing signals.

For example, the time unit is a slot, the time subunit is a symbol, and a slot structure is shown in FIG. 6. As shown in FIG. 7, the sensing field may be divided into four symbol groups, and each symbol group includes three symbols. Different terminal devices may select different symbol groups to transmit sensing signals, thereby achieving a time division multiplexing effect.

Optionally, in frequency division multiplexing, in frequency domain, a plurality of communication devices may occupy different bandwidths by using a subchannel as a granularity to transmit sensing signals.

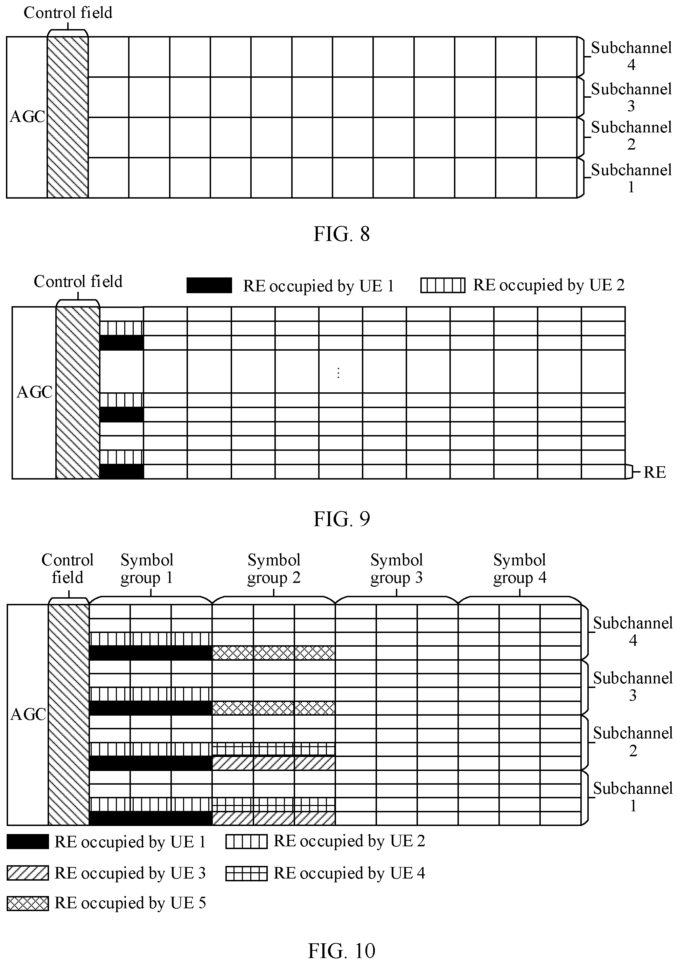

For example, the time unit is a slot, the time subunit is a symbol, and a slot structure is shown in FIG. 6. As shown in FIG. 8, the sensing resource pool includes four subchannels in frequency domain, and different communication devices may select different subchannels in frequency domain to transmit sensing signals, thereby achieving a frequency division multiplexing effect.

Optionally, in comb frequency division multiplexing, different communication devices may transmit sensing signals by using different REs in a same time subunit and a same channel.

For example, the time unit is a slot, the time subunit is a symbol, and a slot structure is shown in FIG. 6. As shown in FIG. 9, it is assumed that the sensing resource pool includes N REs in frequency domain, a UE 1 and a UE 2 perform comb frequency division multiplexing in the sensing field, and both perform mapping by using a comb 4. In this case, one UE (for example, the UE 1) may occupy REs numbered 0, 4, 8, 12, 16, and the like to transmit a sensing signal, and the other UE (for example, the UE 2) may occupy REs numbered 1, 5, 9, 13, 17, and the like to transmit a sensing signal, to achieve a comb frequency division multiplexing effect.

Optionally, a plurality of multiplexing manners of time division multiplexing, frequency division multiplexing, and comb frequency division multiplexing may be simultaneously supported in a same time unit.

For example, the time unit is a slot, the time subunit is a symbol, and a slot structure is shown in FIG. 6. As shown in FIG. 10, it is assumed that the sensing field is divided into four symbol groups in time domain, and includes four subchannels in frequency domain, and subchannels of all symbols support mapping based on a comb 4. In this case, different communication devices may perform resource multiplexing in the slot in a plurality of manners of time division, frequency division, and comb frequency division multiplexing.

For example, a UE 1 and a UE 2 may perform comb frequency division multiplexing in a symbol group 1. A UE 3 and a UE 4 may perform comb frequency division multiplexing in a symbol group 2. In addition, time division multiplexing is performed between the UEs 3 and 4 and the UEs 1 and 2, and frequency division multiplexing is performed between a UE 5 and the UEs 3 and 4.

S502. The first communication device sends a first sequence and a first sensing signal in a first time unit. Correspondingly, a third communication device receives the first sequence from the first communication device.

At least one of a time domain location feature, a frequency domain location feature, or a code domain feature of the first sequence indicates the first sensing resource. For example, the first sequence may be understood as an implementation of the indication sequence in step S501. The indication sequence may be an orthogonal sequence, for example, a Walsh code.

For a time domain structure and a frequency domain structure of the first time unit, respectively refer to the time domain structure and the frequency domain structure of the time unit in step S501. Details are not described herein again.

Optionally, the first sequence is mapped to a control field of the first time unit. To be specific, a part of or all time subunits in X2 time subunits of the first time unit are used to carry the first sequence. For ease of description, in subsequent embodiments of this application, the part of or all the time subunits that are used to carry the first sequence in the X2 time subunits are referred to as a first time subunit group. In other words, the first time subunit group includes the part of or all the time subunits that are used to carry the first sequence in the X2 time subunits. The part of or all the time subunits that are used to carry the first sequence in the X2 time subunits are a time subunit occupied by the first sequence or in which the first sequence is located.

It should be noted that, in this embodiment of this application, unless otherwise specified, X1 time subunits are an AGC field in a time unit, X2 time subunits are a control field in a time unit, and X3 time subunits are a sensing field in a time unit. For a location relationship between the three, refer to related descriptions in step S501. Details are not described herein again.

Optionally, because the first communication device sends the first sensing signal in the first time unit, and the first sensing resource includes the time domain resource and the frequency domain resource that are used to carry the first sensing signal, it may be considered that the time domain resource used to carry the first sensing signal includes a time domain resource in the first time unit, and the frequency domain resource used to carry the first sensing signal includes a frequency domain resource in the first time unit (or corresponding to the first time unit).

In a possible implementation, X3 time subunits of the first time unit may include N1 second time subunit groups. N1 is a positive integer less than or equal to X3. In this case, the time domain resource used to carry the first sensing signal may include at least one of the N1 second time subunit groups.

For example, assuming that a structure of the first time unit is shown in FIG. 7, X3 is equal to 12, and N1 is equal to 4, that is, 12 symbols include four symbol groups. In this case, the time domain resource used to carry the first sensing signal may include at least one of the four symbol groups, for example, may include a symbol group 1 and a symbol group 2.

In a possible implementation, when the sensing resource pool includes M subchannels, the frequency domain resource used to carry the first sensing signal may include a part of or all REs of at least one of the M subchannels.

Optionally, for the first sensing signal sent by the first communication device, the first sensing signal may be reflected by a target to form an echo signal. The first communication device may receive the echo signal, and process the echo signal based on the first sensing signal, to sense a location, a speed, and the like of the target. Alternatively, the first sensing signal may be received by another communication device after being reflected by the target, so that the communication device may process the received signal, to sense a location, a speed, and the like of the target.

S503. The third communication device determines a third sensing resource based on the first sensing resource.

The third sensing resource includes a time domain resource and a frequency domain resource that are used to carry a third sensing signal. The third sensing signal may be understood as a sensing signal to be sent by the third communication device.

Optionally, after receiving the first sequence, the third communication device may determine the first sensing resource based on indication of the first sequence. Details are described in a subsequent embodiment, and are not described herein.

Based on the foregoing solution, the first communication device may send the first sequence, and indicate, by using at least one of the time domain location feature, the frequency domain location feature, or the code domain feature of the first sequence, the first sensing resource occupied (or reserved) by the first communication device. Because sequence sending does not require source and/or channel coding or modulation, the method can support a device that does not have capabilities of source and/or channel encoding/decoding and modulation/demodulation in indicating a resource occupied by the device. Therefore, the first communication device may not have the capabilities of source and/or channel encoding/decoding and modulation/demodulation. In addition, because source and/or channel coding and modulation are not performed when the sequence is sent, a receive end (for example, the third communication device) does not need to perform decoding or demodulation. Therefore, another communication device that does not have the capabilities of source and/or channel encoding/decoding and modulation/demodulation can learn, by detecting the sequence, of the resource occupied (or reserved) by the first communication device, and then avoid the occupied resource as much as possible during resource selection, to reduce resource conflicts and improve sensing performance.

Therefore, based on the resource indication method provided in this application, a device that does not have the capabilities of source and/or channel encoding/decoding and modulation/demodulation can be supported in indicating a resource occupied (or reserved) by the device, so that another device can learn of resource occupation, thereby reducing resource conflicts and improving sensing performance.

The following describes the time domain location feature, the frequency domain location feature, and the code domain feature of the first sequence, and a mapping relationship (or an indication relationship) between the first sensing resource and the features.

Optionally, the time domain location feature of the first sequence includes an index of a time domain location of the first sequence, and the like.

For example, the first time subunit group may be divided into N2 third time subunit groups. In other words, the first time subunit group includes N2 third time subunit groups. In this case, the time domain location feature of the first sequence may include an index of a third time subunit group in which the first sequence is located.

Optionally, the frequency domain location feature of the first sequence may include at least one of the following:
(1) Subchannel on which the first sequence is located, or subchannel occupied by the first sequence.
   For example, the sensing resource includes four subchannels in frequency domain. The subchannel on which the first sequence is located may be at least one of a subchannel 1, a subchannel 2, a subchannel 2, or a subchannel 3.
(2) Comb used for the first sequence during frequency domain mapping. For example, the first sequence may be mapped by using a comb 1, a comb 2, a comb 4, or a comb 8.
(3) Resource element offset used by the first sequence during frequency domain mapping.
   For example, the resource element offset used by the first sequence during frequency domain mapping indicates a start RE on which the first sequence is located. For example, when mapping is performed by using a comb 4, the resource element offset may be 0, 1, 2, or 3.
(4) Area in which the first sequence is located in a subchannel.
   For example, the subchannel may be divided into a plurality of areas, and the first sequence may be mapped to at least one of the plurality of areas.
(5) Quantity of times that the first sequence is repeatedly mapped in one subchannel.

Optionally, the code domain feature of the first sequence may include at least one of the following:
(1) Index of the first sequence.
   For example, the index of the first sequence may be an index of the first sequence in a first sequence group. For example, if the first sequence group includes L1 sequences, the index of the first sequence may be one of 0 to L1-1, or may be one of 1 to L1. The first sequence group may be a predefined sequence group.
(2) Index of a sequence group (denoted as a first sequence group) in which the first sequence is located.
   For example, the index of the first sequence group may be an index of the first sequence group in a plurality of sequence groups. For example, L2 sequence groups may be predefined or preconfigured, and each sequence group may include at least one sequence. The index of the sequence group in which the first sequence is located may be one of 0 to L2-1, or may be one of 1 to L2.
(3) Index of a base sequence (denoted as a first base sequence) for generating the first sequence.
   To be specific, the first sequence may be generated based on the first base sequence. For example, the index of the first base sequence may be an index of the first base sequence in a base sequence group.
(4) Index of a cyclic shift (denoted as a first cyclic shift) for generating the first sequence.
   To be specific, the first sequence may be a sequence obtained by performing a cyclic shift on an initial sequence. When cyclic shifts of different lengths are performed on the initial sequence, different sequences are obtained. For example, cyclic shifts of different lengths may form a cyclic shift group, and the index of the first cyclic shift may be an index of the first cyclic shift in the cyclic shift group.
(5) Index of an orthogonal cover code (orthogonal cover code, OCC) (denoted as a first OCC code) for generating the first sequence.
   To be specific, the first sequence may be generated based on the OCC code. For example, the base sequence may be modulated by using the OCC code to obtain the first sequence. When the base sequence is modulated by using different OCC codes, different sequences are obtained. For example, different OCC codes may form an OCC code group, and the index of the first OCC code may be an index of the first OCC code in the OCC code group.
(6) Length of the first sequence. For example, the length of the first sequence may be 8, 16, 32, or 64. The length of the first sequence is not specifically limited in this application.

Optionally, the time domain location feature, the frequency domain location feature, and the code domain feature of the first sequence, and the mapping relationship (or the indication relationship) of the first sensing resource may meet at least one of the following:

The time domain location feature of the first sequence may indicate the time domain resource of the first sensing resource, the code domain feature of the first sequence may indicate the time domain resource of the first sensing resource, or the frequency domain location feature of the first sequence may indicate the frequency domain resource and/or the time domain resource of the first sensing resource.

Optionally, a time domain feature of the first sensing resource indicated by the time domain location feature, the frequency domain location feature, or the code domain feature of the first sequence may include a second time subunit group in which the first sensing signal is located, and an indicated frequency domain feature of the first sensing resource may include at least one of the following: a subchannel on which the first sensing signal is located, a comb of the first sensing signal during frequency domain mapping, or a resource element offset used by the first sensing signal during frequency domain mapping.

The following describes a specific indication manner based on the time domain location feature, the frequency domain location feature, or the code domain feature of the first sequence.

For indication of the subchannel on which the first sensing signal is located:
Optionally, the subchannel on which the first sensing signal is located may be indicated by using the subchannel on which the first sequence is located. For example, the subchannel on which the first sensing signal is located is the same as the subchannel on which the first sequence is located. For example, when the first sequence is mapped to a subchannel 1, a subchannel 2, a subchannel 3, and a subchannel 4, the subchannel on which the first sensing signal is located may include the subchannel 1, the subchannel 2, the subchannel 3, and the subchannel 4.

Optionally, the length of the first sequence may be far less than a sequence length corresponding to the first sensing signal. Therefore, all elements of the first sequence may be mapped to one subchannel. In other words, the first sequence may be completely mapped to one subchannel. In this scenario, if the subchannel on which the first sensing signal is located includes a plurality of subchannels, the first sequence may be repeatedly mapped to the plurality of subchannels, to indicate the plurality of subchannels on which the first sensing signal is located. The sequence length corresponding to the first sensing signal is a length of a sequence used to generate the first sensing signal.

For example, the first sequence mapped to the subchannel 1, the subchannel 2, the subchannel 3, and the subchannel 4 may be considered as at least four times of repeated mapping of the first sequence, that is, the first sequence is mapped to each of the subchannel 1, the subchannel 2, the subchannel 3, and the subchannel 4 at least once.

The comb of the first sensing signal during frequency domain mapping and the resource element offset used by the first sensing signal during frequency domain mapping may be discussed in the following two cases:
Case 1: The comb and the used resource element offset of the first sensing signal during frequency domain mapping are represented by using an RE group in which the first sensing signal is located. The comb and the used resource element offset of the first sequence during frequency domain mapping are represented by using an RE group in which the first sequence is located.

Optionally, in the X3 time subunits of the first time unit, a plurality of REs on each of the M subchannels may include K1 first RE groups. One first RE group includes REs that are evenly distributed based on a comb K1 in frequency domain, and K1 is a positive integer greater than or equal to 1. In this case, the frequency domain resource used to carry the first sensing signal includes at least one first RE group in at least one subchannel, the comb of the first sensing signal during frequency domain mapping is K1, and the resource element offset used by the first sensing signal during frequency domain mapping is an index of a start RE in a first RE group in which the first sensing signal is located.

For example, one subchannel includes 32 REs, indexes of the 32 REs are respectively 0 to 31, and K1 is equal to 4. The subchannel may include four first RE groups. Indexes of REs included in a first RE group 1 are 0, 4, 8, 16, 20, 24, and 28. Indexes of REs included in a first RE group 2 are 1, 5, 9, 17, 21, 25, and 29. Indexes of REs included in a first RE group 3 are 2, 6, 10, 18, 22, 26, and 30. Indexes of REs included in a first RE group 4 are 3, 7, 11, 19, 23, 27, and 31.

In this case, if the RE group in which the first sensing signal is located is the first RE group 1, the comb of the first sensing signal during frequency domain mapping is 4, an index of a start RE in the first RE group 1 is 0, and the resource element offset used by the first sensing signal during frequency domain mapping is 0.

Optionally, in the first time subunit group, each of the M subchannels in frequency domain may include at least N3 first areas, and each first area may include at least K2*L REs. K2 is the comb used for the first sequence (during frequency domain mapping), L is the length of the first sequence, and N3 is a positive integer greater than or equal to N1.

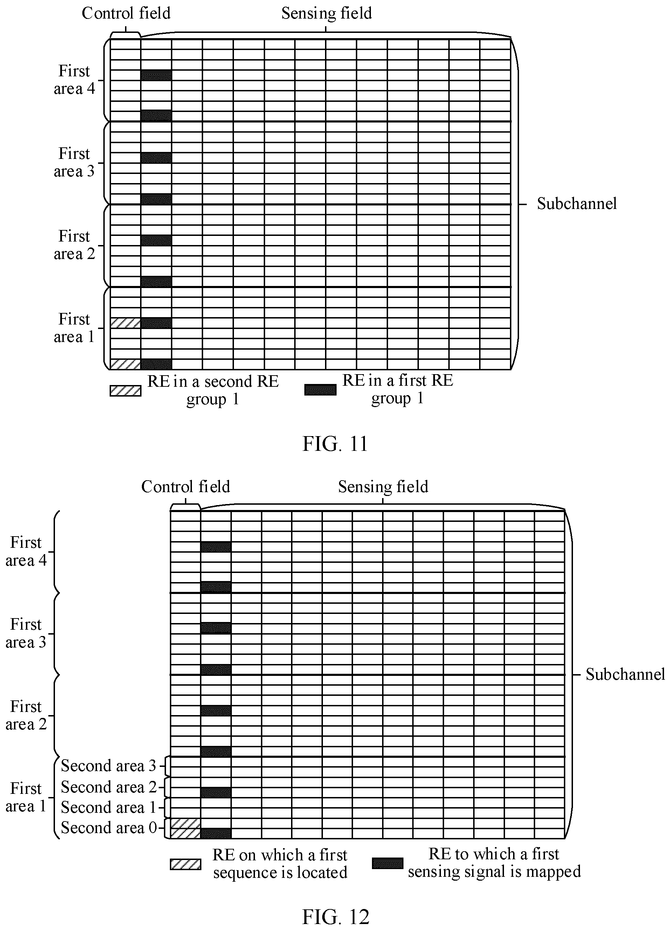

For example, in each of the M subchannels, the subchannel may be divided into at least N3 first areas in a size of K2*L by starting from a lowest RE of the subchannel. For example, N1=N3=4, and K2 is equal to 4. As shown in FIG. 11, one subchannel may include four first areas, and each first area may include eight REs.

Further, the plurality of REs of each first area may include K2 second RE groups, one second RE group includes REs that are evenly distributed based on the comb K2 in frequency domain, K2 is a positive integer greater than or equal to 1, and K2 and K1 may be equal. In this case, the first sequence may be mapped to one second RE group, the comb of the first sequence during frequency domain mapping is K2, and the resource element offset used by the first sequence during frequency domain mapping is an index of a start RE in the second RE group in which the first sequence is located.

For example, based on the example shown in FIG. 11, K2 is equal to 4, and each first area may include four second RE groups. For a first area 1, indexes of REs included in a second RE group 1 are 0 and 4, indexes of REs included in a second RE group 2 are 1 and 5, indexes of REs included in a second RE group 3 are 2 and 6, and indexes of REs included in a second RE group 4 are 3 and 7. For a first area 2, indexes of REs included in a second RE group 1 are 8 and 12, indexes of REs included in a second RE group 2 are 9 and 13, indexes of REs included in a second RE group 3 are 10 and 14, and indexes of REs included in a second RE group 4 are 11 and 15; and so on.

Optionally, based on the case 1, the first RE group in which the first sensing signal is located may be indicated by using the second RE group in which the first sequence is located.

For example, the index of the first RE group in which the first sensing signal is located is the same as the index of the second RE group in which the first sequence is located. In this case, the comb of the first sensing signal during frequency domain mapping is the same as the comb of the first sequence during frequency domain mapping, and the resource element offset used by the first sensing signal during frequency domain mapping is the same as the resource element offset used by the first sequence during frequency domain mapping.

For example, based on the example shown in FIG. 11, if the second RE group in which the first sequence is located is the second RE group 1 in the first area 1, the index of the first RE group in which the first sensing signal is located is 1. Combs of the first sequence and the first sensing signal during frequency domain mapping are 4, and resource element offsets used by the first sequence and the first sensing signal during frequency domain mapping are 0.

It should be noted that, due to a space limitation, examples of this application and time and frequency domain locations of the first sequence and time and frequency domain locations of the first sensing signal in the accompanying drawings are merely examples for description. A value of each parameter does not represent an actual value, and the time and frequency domain locations of the first sequence and the first sensing signal do not represent a specific length relationship between the length of the first sequence and the sequence length corresponding to the first sensing signal. Generally, in actual application, the sequence length used by the first sensing signal is far greater than the length of the first sequence.

Optionally, because each of the M subchannels is divided into K1 first RE groups in the X3 time subunits of the first time unit, and each first area of each subchannel is divided into K2 second RE groups in the first time subunit group, a second RE group in which the first sequence is located in a first area of a subchannel indicates a first RE group in which the first sensing signal is located in the subchannel.

For example, based on the example shown in FIG. 11, assuming that the subchannel shown in FIG. 11 is a subchannel 1, a second RE group 1 in which the first sequence is located in a first area 1 of the subchannel 1 indicates that a first RE group in which the first sensing signal is located in the subchannel 1 is a first RE group 1.

Optionally, if the first sensing signal occupies a plurality of subchannels, in each subchannel, a first RE group in which the first sensing signal is located in the subchannel may be indicated by using a second RE group in which the first sequence is located in the subchannel. First RE groups in which the first sensing signal is located in different subchannels may be the same or may be different. This is not specifically limited in this application.

Case 2: The comb of the first sensing signal during frequency domain mapping is predefined, preconfigured, or preset. The comb of the first sequence during frequency domain mapping is 1.

Optionally, in the case 2, the resource element offset used by the first sensing signal during frequency domain mapping may be indicated by using an area in which the first sequence is located in a subchannel.

Optionally, in the first time subunit group, each of the M subchannels in frequency domain may include at least N3 first areas, and each first area may include at least K2*L REs. K2 may be equal to the comb of the first sensing signal during frequency domain mapping.

Further, each first area includes at least K2 second areas, and each second area includes at least L REs. For example, in each first area, the first area may be divided into at least K2 second areas in a size of L by starting from a lowest RE of the first area.

For example, N1=N3=4, and K2 is equal to the comb 4 of the first sensing signal during frequency domain mapping. As shown in FIG. 12, one subchannel may include four first areas, and each first area includes four second areas.

In this case, an area in which the first sequence is located in the subchannel may be a second area in which the first sequence is located in the subchannel. An index of the second area in which the first sequence is located in the subchannel may indicate the resource element offset used by the first sensing signal during frequency domain mapping. For example, the resource element offset used by the first sensing signal during frequency domain mapping is equal to the index of the second area in which the first sequence is located. A minimum index of the second area is 0. Alternatively, the resource element offset used by the first sensing signal during frequency domain mapping is equal to the index of the second area in which the first sequence is located minus 1.

For example, based on the example shown in FIG. 12, it is assumed that indexes of the four second areas in each first area are respectively 0 to 3 (or are respectively 1 to 4), and the resource element offset used by the first sensing signal during frequency domain mapping is one of 0 to 3. In this case, in FIG. 12, if the index of the second area in which the first sequence is located is 0 (or 1), it indicates that the resource element offset used by the first sensing signal during frequency domain mapping is 0.

Optionally, because each of the M subchannels is divided into at least N3 first areas in the first time unit group, and each first area is divided into at least K2 second areas, an index of a second area in which the first sequence is located in a first area of a subchannel indicates a resource element offset used by the first sensing signal during frequency domain mapping in the subchannel.

For example, based on the example shown in FIG. 12, assuming that the subchannel shown in FIG. 12 is a subchannel 1, a second area 0 (or 1) in which the first sequence is located in a first area 1 of the subchannel 1 indicates that a resource element offset used by the first sensing signal during frequency domain mapping in the subchannel 1 is 0.

Optionally, if the first sensing signal occupies a plurality of subchannels, in each subchannel, a resource element offset used by the first sensing signal during frequency domain mapping in the subchannel may be indicated by using a second area in which the first sequence is located in the subchannel. Resource element offsets used by the first sensing signal during frequency domain mapping in different subchannels may be the same or may be different. This is not specifically limited in this application.

The second time subunit group in which the first sensing signal is located may be indicated in the following four manners:
Manner 1: The second time subunit group in which the first sensing signal is located is indicated by using an area in which the first sequence is located in a subchannel.

Optionally, in the first time subunit group, each of the M subchannels in frequency domain may include at least N3 first areas, and each first area may include at least K2*L REs. Refer to related descriptions in the case 1 or case 2. Details are not described herein again.

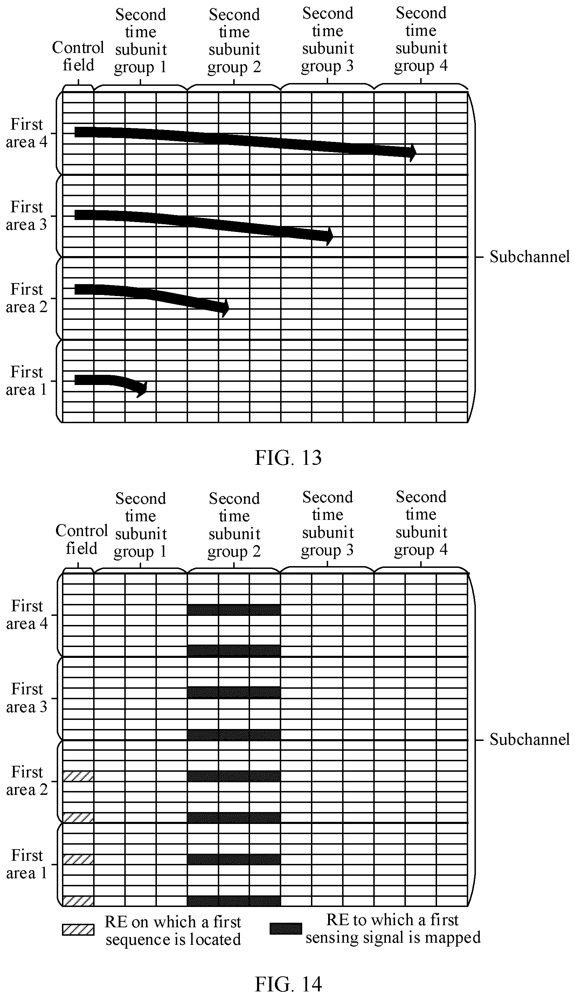

For example, N1=N3=4, and K2 is equal to 4. As shown in FIG. 13, one subchannel may include four first areas, and each first area may include eight REs.

In this case, an area in which the first sequence is located in the subchannel may be a first area in which the first sequence is located in the subchannel. An index of the first area in which the first sequence is located in the subchannel may indicate an index of the second time subunit group in which the first sensing signal is located. For example, the index of the second time subunit group in which the first sensing signal is located is the same as the index of the first area in which the first sequence is located.

For example, based on the example shown in FIG. 13, it is assumed that indexes of the four first areas in the subchannel are respectively 1 to 4, and indexes of the four second time subunit groups are also 1 to 4. In this case, in FIG. 13, if the index of the first area in which the first sequence is located is 1, it indicates that the index of the second time subunit group in which the first sensing signal is located is also 1.

Optionally, because each of the M subchannels is divided into at least N3 first areas, a first area in which the first sequence is located in a subchannel indicates a second time subunit group in which the first sensing signal is located in the subchannel.

For example, based on the example shown in FIG. 13, if the subchannel shown in FIG. 13 is a subchannel 1, a first area 1 in which the first sequence is located in the subchannel 1 indicates that an index of a second time subunit group in which the first sensing signal is located in the subchannel 1 is 1.

Optionally, if the first sensing signal occupies a plurality of subchannels, in each subchannel, an index of a second time subunit in which the first sensing signal is located in the subchannel may be indicated by using a first area in which the first sequence is located in the subchannel. Indexes of second time subunits in which the first sensing signal is located in different subchannels may be the same or may be different. This is not specifically limited in this application.

Manner 2: The second time subunit in which the first sensing signal is located is indicated by using a quantity of times that the first sequence is repeatedly mapped in one subchannel.

Optionally, in the first time subunit group, each of the M subchannels in frequency domain may include at least N3 first areas, and each first area may include at least K2*L REs. Refer to related descriptions in the case 1 or case 2. Details are not described herein again.

In this case, the quantity of times that the first sequence is repeatedly mapped in one subchannel may be a quantity of times that the first sequence is repeatedly mapped in at least N3 first areas. A maximum quantity of times that the first sequence is mapped in one first area is 1, that is, the first sequence is not allowed to be repeatedly mapped in one first area.

The quantity of times of repeated mapping may indicate an index of the second time subunit group in which the first sensing signal is located. For example, the index of the second time subunit group in which the first sensing signal is located is the same as the quantity of times of repeated mapping. For example, the quantity of times of repeated mapping is 1, indicating that the index of the second time subunit group in which the first sensing signal is located is 1, or the quantity of times of repeated mapping is 2, indicating that the index of the second time subunit group in which the first sensing signal is located is 2.

For example, as shown in FIG. 14, N1=N3=4, K2 is equal to 4, one subchannel includes four first areas, and each first area may include eight REs. Assuming that the first sequence is mapped once in a first area 1 and once in a first area 2, that is, repeatedly mapped twice in the four first areas, the index of the second time subunit group in which the first sensing signal is located is 2.

Optionally, because each of the M subchannels is divided into at least N3 first areas, a quantity of times that the first sequence is repeatedly mapped in at least N3 first areas of a subchannel indicates a second time subunit group in which the first sensing signal is located in the subchannel.

For example, based on the example shown in FIG. 14, if the subchannel shown in FIG. 14 is a subchannel 1, a quantity 2 of times that the first sequence is repeatedly mapped in four first areas of the subchannel 1 indicates that an index of a second time subunit group in which the first sensing signal is located in the subchannel 1 is 2.

Optionally, if the first sensing signal occupies a plurality of subchannels, in each subchannel, an index of a second time subunit in which the first sensing signal is located in the subchannel may be indicated by using a quantity of times that the first sequence is repeatedly mapped in N3 first areas of the subchannel. Indexes of second time subunits in which the first sensing signal is located in different subchannels may be the same or may be different. This is not specifically limited in this application.

Manner 3: The second time subunit in which the first sensing signal is located is indicated by using an index of a third time subunit group in which the first sequence is located.

In a possible implementation, an index of the second time subunit group in which the first sensing signal is located is the same as the index of the third time subunit group in which the first sequence is located.

For example, when the first sequence is mapped to a third time subunit 1, it indicates that the index of the second time subunit group in which the first sensing signal is located is 1; when the first sequence is mapped to a third time subunit 2, it indicates that the index of the second time subunit group in which the first sensing signal is located is 2; and so on.

In another possible implementation, the index of the second time unit group in which the first sensing signal is located is equal to the quantity N2 of third time subunit groups minus the index of the third time subunit group in which the first sequence is located.

For example, the quantity N2 of third time subunit groups is equal to 4. When the first sequence is mapped to a third time subunit 1, it indicates that the index of the second time subunit group in which the first sensing signal is located is 4-1=3.

Optionally, if the first sensing signal occupies a plurality of subchannels, in each subchannel, an index of a second time subunit group in which the first sensing signal is located in the subchannel may be indicated by using an index of a third time subunit group in which the first sequence is located. Indexes of second time subunits in which the first sensing signal is located in different subchannels may be the same or may be different. This is not specifically limited in this application.

Manner 4: The second time subunit group in which the first sensing signal is located is indicated by using the code domain feature of the first sequence. In other words, the code domain feature of the first sequence may indicate the second time subunit group in which the first sensing signal is located.

In a possible implementation, an index of the second time subunit group in which the first sensing signal is located may be equal to one of the following: the index of the first sequence, the index of the first sequence group, the index of the first base sequence, the index of the first cyclic shift, or the index of the first OCC code.

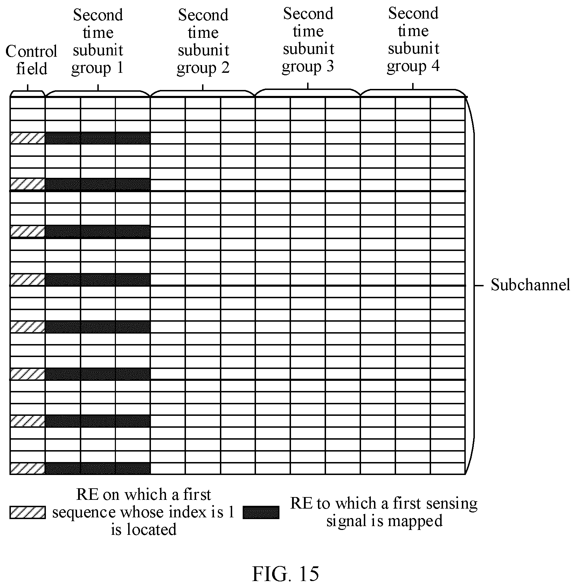

For example, the first sequence belongs to the first sequence group, and the first sequence group includes L1 sequences. Sequences numbered 1, 2, ..., and L1 may respectively indicate that indexes of second time subunit groups in which the first sensing signal is located are 1, 2, ..., and L1. For example, as shown in FIG. 15, the index of the first sequence is 1, indicating that the index of the second time subunit group in which the first sensing signal is located is 1.

Optionally, in Manner 4, the first sequence may be mapped only once in one subchannel, or may be repeatedly mapped for a plurality of times. This is not specifically limited in this application.

Optionally, if the first sensing signal occupies a plurality of subchannels, in each subchannel, an index of a second time subunit in which the first sensing signal is located in the subchannel may be indicated by using the code domain feature of the first sequence. Indexes of second time subunits in which the first sensing signal is located in different subchannels may be the same or may be different. This is not specifically limited in this application.

In some implementation scenarios, the first sensing signal may be a periodic signal. Therefore, the first sensing resource may include a periodic resource. To be specific, in addition to a time-frequency resource used to carry the first sensing signal in the first time unit, the first sensing resource further includes a time-frequency resource used to carry the first sensing signal in another time unit that is periodically extended based on a periodicity of the first sensing signal. The time-frequency resource used to carry the first sensing signal in the another time unit may be understood as a reserved resource of the first communication device.

Optionally, in this scenario, the first communication device may indicate the periodicity of the first sensing signal by using the code domain feature of the first sequence. The periodicity may be measured in unit of millisecond (ms), a quantity of symbols, a quantity of slots, or the like.

For example, the code domain feature of the first sequence is the index of the first sequence. P periodicities (for example, 0.125 ms, 0.25 ms, 0.5 ms, 1 ms, and 10 ms) may be preconfigured. In this case, the periodicity of the first sensing signal may be indicated by using the index of the sequence. For example, when the sequence index is 1, it indicates that the periodicity of the first sensing signal is a first periodicity (for example, 0.125); when the sequence index is 2, it indicates that the periodicity of the first sensing signal is a second periodicity (for example, 0.25 ms); ..., and when the sequence index is P, it indicates that the periodicity of the first sensing signal is a P^{th} periodicity.

Optionally, when the first sequence is an orthogonal sequence, because there are a maximum of L orthogonal sequences whose lengths are L, to indicate the P periodicities, the length L of the first sequence needs to be greater than the quantity P of periodicities.

Optionally, when the first sensing signal is a periodic signal, the first communication device may send the first sequence in each time unit in which the first sensing signal needs to be sent, to indicate a time-frequency resource on which the first sensing signal is located. For a manner of indicating, in each time unit by using the first sequence, the time-frequency resource on which the first sensing signal is located, refer to the foregoing descriptions. Details are not described herein again.

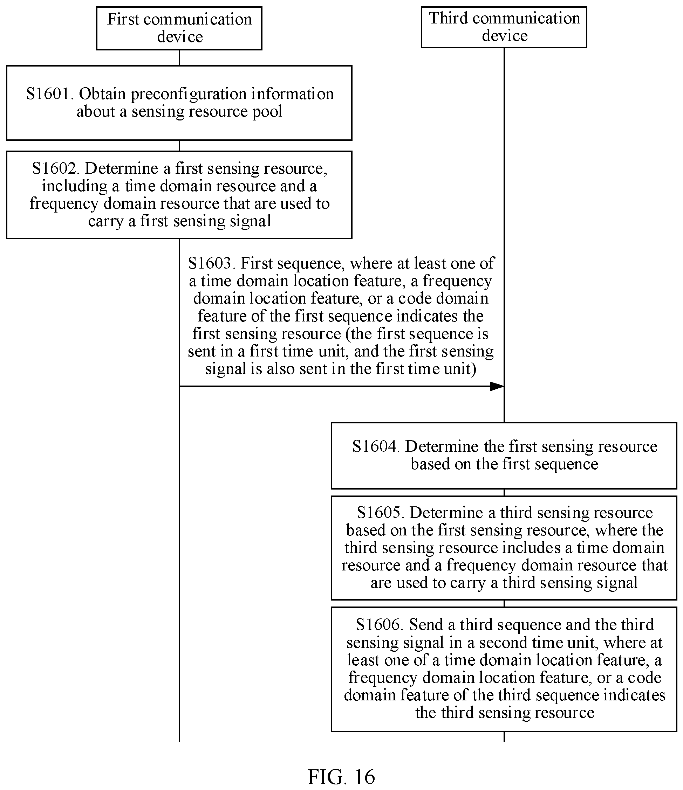

The foregoing describes implementations of the resource indication method provided in this application. The following provides an implementation of applying the method to a specific procedure. With reference to FIG. 16, the procedure may include the following steps.

S1601. A first communication device obtains preconfiguration information about a sensing resource pool.

Optionally, the preconfiguration information about the sensing resource pool includes two parts: preconfiguration information of the sensing resource pool, for example, a bandwidth part (bandwidth part, BWP), a subchannel, and a time unit in which the sensing resource pool is located; and preconfiguration information of a sensing field and/or a control field in the sensing resource pool, for example, X3 time subunits of the sensing field include N1 second time subunit groups, and a length of an indication sequence is L.

S1602. The first communication device determines a first sensing resource.

Optionally, if the first communication device detects no indication sequence of another communication device, the first communication device may consider that all sensing resources in the sensing resource pool are idle. In this case, the first communication device may select any time domain and frequency domain resources in the sensing resource pool based on a sensing service requirement of the first communication device.

If the first communication device detects an indication sequence of another communication device, the first communication device may determine the first sensing resource based on resource occupation indicated by the indication sequence.

For example, assuming that the first communication device receives a second sequence from a second communication device, and at least one of a time domain location feature, a frequency domain location feature, or a code domain feature of the second sequence indicates a second sensing resource, the first communication device may determine the first sensing resource based on the second sensing resource. For example, the first communication device selects the first sensing resource from sensing resources in the sensing resource pool other than the second sensing resource. For example, the first sensing resource does not overlap the second sensing resource.

The second sensing resource includes a time domain resource and a frequency domain resource that are used to carry a second sensing signal. The second sensing signal may be understood as a sensing signal to be sent by the second communication device. For a manner in which the second sequence indicates the second sensing resource, refer to the foregoing manner in which the first sequence indicates the first sensing resource. Details are not described herein again.

For other related descriptions of the first sensing resource, refer to related descriptions in step S501. Details are not described herein again.

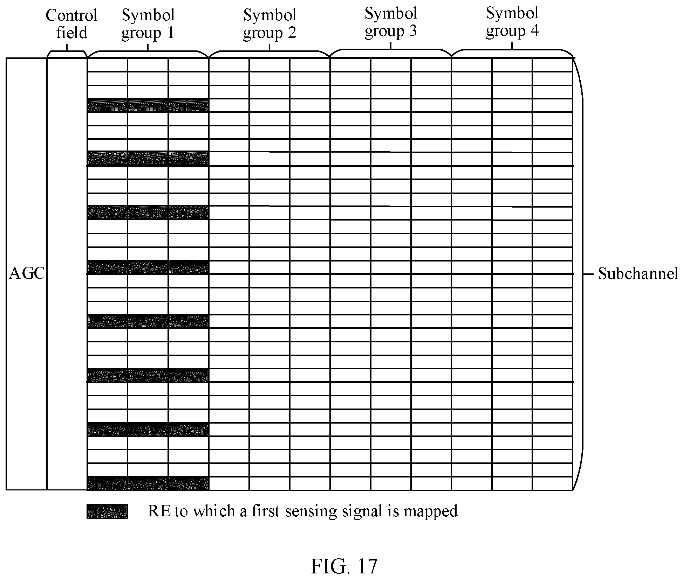

For example, a first time unit is a slot, a structure of the slot is shown in FIG. 6, 12 symbols of the sensing field include four symbol groups, and the sensing resource pool includes four subchannels. In this embodiment, it is assumed that the first sensing resource determined by the first communication device includes a symbol group 1 in time domain, and includes all of the four subchannels in frequency domain, the first sensing signal is mapped by using a comb 4, and a resource element offset used by the first sensing signal is 0. In this case, a location of the first sensing resource in one subchannel may be shown in FIG. 17.

S1603. The first communication device sends a first sequence and the first sensing signal in the first time unit. Correspondingly, a third communication device receives the first sequence from the first communication device.

Optionally, after determining the first sensing resource, the first communication device may map a sequence used to generate the first sensing signal to the first sensing resource. In addition, the first communication device may generate the first sequence based on the location of the first sensing resource, and map the first sequence to the control field, to indicate the first sensing resource.

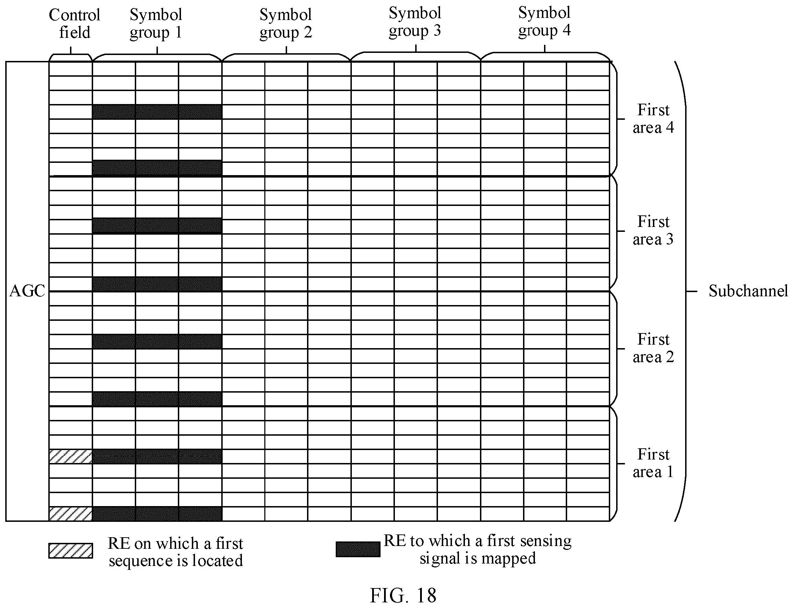

For example, a subchannel on which the first sensing signal is located is the same as a subchannel on which the first sequence is located, an index of a first RE group in which the first sensing signal is located is the same as an index of a second RE group in which the first sequence is located (that is, the two use a same comb and a same resource element offset), and an index of a second time subunit group in which the first sensing signal is located is the same as an index of a first area in which the first sequence is located. In this case,
the first sequence is mapped once in each of the four subchannels (that is, the first sequence is repeatedly mapped four times, to indicate the four subchannels on which the first sensing signal is located). In addition, in each subchannel, the first sequence is mapped by using the comb 4 (indicating that the first sensing signal is mapped by using the comb 4), the resource element offset is 0 (indicating that the resource element offset used by the first sensing signal is 0), each subchannel of the control field includes four first areas (corresponding to the four symbol groups of the sensing field), and the first sequence is mapped in a first area 1 (indicating that a symbol group in which the first sensing signal is located is a symbol group 1). Therefore, a mapping result of the first sequence or a location of the first sequence may be shown in FIG. 18.

Optionally, after completing mapping of the sequence used to generate the first sensing signal and the first sequence, the first communication device may generate and send a time domain signal.

S 1604. The third communication device determines the first sensing resource based on the first sequence.

Optionally, the third communication device may receive the first sequence of the first communication device in the control field of the first time unit, and determine the first sensing resource based on a retrieval result of the first sequence.

In a possible implementation, the third communication device may perform blind detection by using a subchannel as a granularity. First, a comb and a resource element offset are assumed to sample a signal on an RE corresponding to the comb and the resource element offset, to obtain a receiving sequence. For example, assuming that the comb is 4 and the resource element offset is 0, signals on REs whose indexes are 0, 4, 8, 12, and the like may be sampled to obtain a receiving sequence. Then, cross-correlation search is performed on the receiving sequence and each sequence in a first sequence group (which may be a preconfigured sequence group, where the first sequence belongs to the first sequence group). If a result of a cross-correlation operation between a sequence (that is, the first sequence) in the first sequence group and the receiving sequence has a peak value, the assumption succeeds, and then a location of the first sensing resource may be determined based on a location of the receiving sequence. If a result of a cross-correlation operation between the receiving sequence and each sequence in the first sequence group is close to 0, the assumption fails, and the third communication device performs re-assumption and blind detection until the assumption succeeds.

In another possible implementation, when a plurality of communication devices do not perform sensing resource multiplexing, the third communication device may detect signal received power of each RE in the control field, determine that an RE whose signal received power is greater than a threshold has the first sequence mapped thereto, then determine the location of the first sequence, and determine a location of the first sensing resource based on the location of the first sequence.

For example, based on the example shown in FIG. 18, the third communication device may detect that there is a sequence on REs whose resource element offset is 0 and whose interval is 4 in a first area 1 of each subchannel. Therefore, the third communication device may determine that the first sensing signal is mapped to the four subchannels (sequence transmission is detected in all of the four subchannels), and the first sensing resource includes the symbol group 1 of the sensing field (based on that there is a sequence in the first area 1), and REs whose comb is 4 and whose resource element offset is 0 in each subchannel (based on that there is a sequence on the REs whose resource element offset is 0 and whose interval is 4 in the first area 1). That is, the third communication device may determine that the first sensing resource shown in FIG. 18 is occupied.

S1605. The third communication device determines a third sensing resource based on the first sensing resource.

Optionally, based on step S1601, the third communication device may identify that the first sensing resource is occupied. Therefore, the third communication device may select, from idle resources other than the first sensing resource, an appropriate time-frequency resource as the third sensing resource based on a sensing service requirement of the third communication device.

For example, the third sensing resource includes a time domain resource and a frequency domain resource that are used to carry a third sensing signal in a second time unit. After step S1605, the third communication device may further perform the following step S1606:
S1606. The third communication device sends a third sequence and the third sensing signal in the second time unit.

At least one of a time domain location feature, a frequency domain location feature, or a code domain feature of the third sequence indicates the third sensing resource. Refer to the foregoing related descriptions of indicating the first sensing resource by the first sequence. Details are not described herein again.

Based on this solution, the first communication device sends the first sequence to indicate the first sensing resource, and the third communication device receives the first sequence, determines the first sensing resource based on the first sequence, and determines sensing resource occupation. Therefore, when determining the third sensing resource, the third communication device can avoid the occupied first sensing resource as much as possible, to reduce resource conflicts and improve sensing performance.

It may be understood that, in the foregoing embodiments, methods and/or steps implemented by the first communication device may alternatively be implemented by a component (for example, a processor, a chip, a chip system, a circuit, a logic module, or software, for example, a chip or a circuit) that may be used in the first communication device. Methods and/or steps implemented by the third communication device may alternatively be implemented by a component (for example, a processor, a chip, a chip system, a circuit, a logic module, or software, for example, a chip or a circuit) that may be used in the third communication device.

The foregoing mainly describes the solution provided in this application. Correspondingly, this application further provides a communication apparatus. The communication apparatus is configured to implement the foregoing methods. The communication apparatus may be the first communication device in the foregoing method embodiment, or an apparatus including the first communication device, or a component that can be used in the first communication device. Alternatively, the communication apparatus may be the third communication device in the foregoing method embodiment, or an apparatus including the third communication device, or a component that can be used in the third communication device.

t may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware or a software functional module. It should be noted that, in embodiments of this application, module division is an example, and is merely a logical function division. In actual implementation, another division manner may be used.

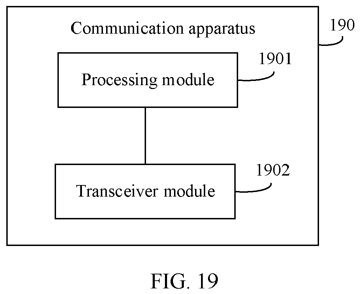

FIG. 19 is a diagram of a structure of a communication apparatus 190. The communication apparatus 190 includes a processing module 1901 and a transceiver module 1902. The communication apparatus 190 may be configured to implement a function of the first communication device, the second communication device, or the third communication device.

In some embodiments, the communication apparatus 190 may further include a storage module (not shown in FIG. 19), configured to store program instructions and data.

In some embodiments, the transceiver module 1902 may also be referred to as a transceiver unit, and is configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, which are respectively configured to perform receiving and sending type steps performed by the first communication device, the second communication device, or the third communication device in the foregoing method embodiments, and/or configured to support another process of the technology described in this specification. The processing module 1901 may be configured to perform processing type steps (for example, determining and generation) performed by the first communication device, the second communication device, or the third communication device in the foregoing method embodiments, and/or configured to support another process of the technology described in this specification.

When the communication apparatus 190 is configured to implement a function of the first communication device:
The processing module 1901 is configured to determine a first sensing resource. The first sensing resource includes a time domain resource and a frequency domain resource that are used to carry a first sensing signal. The transceiver module 1902 is configured to send a first sequence and the first sensing signal in a first time unit. At least one of a time domain location feature, a frequency domain location feature, or a code domain feature of the first sequence indicates the first sensing resource.

Optionally, the transceiver module 1902 is further configured to receive a second sequence from a second communication device. At least one of a time domain location feature, a frequency domain location feature, or a code domain feature of the second sequence indicates a second sensing resource, and the second sensing resource includes a frequency domain resource and a time domain resource that are used to carry a second sensing signal. The processing module 1901 is specifically configured to determine the first sensing resource based on the second sensing resource.

Optionally, the first time unit includes X time subunits, and in the X time subunits: start X1 time subunits are used for automatic gain control AGC, a part of or all time subunits in X2 time subunits after the X1 time subunits are used to carry the first sequence, a part of or all time subunits in X3 time subunits after the X2 time subunits are used to carry the first sensing signal, X1+X2+X3≤X, X1, X2, and X3 are positive integers, and X is a positive integer greater than or equal to 3.

Optionally, the X3 time subunits include N1 second time subunit groups, and N1 is a positive integer less than or equal to X3. The time domain resource used to carry the first sensing signal includes at least one of the N1 second time subunit groups.

Optionally, the first sensing resource is located in a sensing resource pool, the sensing resource pool includes M subchannels in frequency domain, and M is a positive integer greater than or equal to 1. The frequency domain resource used to carry the first sensing signal includes a part of or all resource elements REs of at least one of the M subchannels.

Optionally, in the X3 time subunits, a plurality of REs of each of the M subchannels include K1 first RE groups, one first RE group includes REs that are evenly distributed based on a comb K1 in frequency domain, and K1 is a positive integer greater than or equal to 1. The frequency domain resource used to carry the first sensing signal includes at least one first RE group in the at least one subchannel.

Optionally, in a first time subunit group, each of the M subchannels includes at least N3 first areas, each first area includes at least K2*L REs, K2 is a comb used for the first sequence, L is a length of the first sequence, N3 is a positive integer greater than or equal to N1, and the first time subunit group includes the part of or all the time subunits that are used to carry the first sequence in the X2 time subunits. The frequency domain location feature of the first sequence includes an index of a first area in which the first sequence is located, or a quantity of times that the first sequence is repeatedly mapped in the at least N3 first areas, where a maximum quantity of times that the first sequence is mapped in one first area is 1.

Optionally, an index of a second time subunit group in which the first sensing signal is located is the same as the index of the first area in which the first sequence is located; or the index of the second time subunit group in which the first sensing signal is located is the same as the quantity of times that the first sequence is repeatedly mapped in the N3 first areas.

Optionally, the plurality of REs of each of the at least N3 first areas include K2 second RE groups, and one second RE group includes REs that are evenly distributed based on the comb K2 in frequency domain. The frequency domain location feature of the first sequence includes an index of a second RE group in which the first sequence is located.

Optionally, an index of a first RE group in which the first sensing signal is located is the same as the index of the second RE group in which the first sequence is located.

Optionally, the part of or all the time subunits that are used to carry the first sequence in the X2 time subunits include N2 third time subunit groups, and N2 is a positive integer less than or equal to X2. The time domain location feature of the first sequence includes an index of a third time subunit group in which the first sequence is located.

Optionally, the index of the second time subunit group in which the first sensing signal is located is the same as the index of the third time subunit group in which the first sequence is located.

Optionally, the code domain feature of the first sequence indicates the second time subunit group in which the first sensing signal is located.

Optionally, the code domain feature of the first sequence includes at least one of the following: an index of the first sequence, an index of a sequence group in which the first sequence is located, an index of a base sequence for generating the first sequence, an index of a cyclic shift for generating the first sequence, or an index of an orthogonal cover code OCC for generating the first sequence.

Optionally, the frequency domain location feature of the first sequence includes a subchannel on which the first sequence is located.

Optionally, a subchannel on which the first sensing signal is located is the same as the subchannel on which the first sequence is located.

When the communication apparatus 190 is configured to implement a function of the third communication device:
The transceiver module 1902 is configured to receive a first sequence from a first communication device. At least one of a time domain location feature, a frequency domain location feature, or a code domain feature of the first sequence indicates a first sensing resource, and the first sensing resource includes a frequency domain resource and a time domain resource that are used to carry a first sensing signal. The processing module 1901 is configured to determine a third sensing resource based on the first sensing resource. The third sensing resource includes a time domain resource and a frequency domain resource that are used to carry a third sensing signal.

Optionally, the transceiver module 1902 is further configured to send a third sequence and the third sensing signal in a second time unit. At least one of a time domain location feature, a frequency domain location feature, or a code domain feature of the third sequence indicates the third sensing resource.

Optionally, the third sensing resource does not overlap the first sensing resource.

All related content of steps in the foregoing method embodiments may be cited in function descriptions of corresponding functional modules. Details are not described herein again.

In this application, the communication apparatus 190 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing function.

In a possible product form, a person skilled in the art may figure out that the communication apparatus 190 may use a form of the communication apparatus 400 shown in FIG. 4a.

In an example, a function/an implementation process of the processing module 1901 in FIG. 19 may be implemented by the processor 401 in the communication apparatus 400 shown in FIG. 4a by invoking computer-executable instructions stored in the memory 403, and a function/an implementation process of the transceiver module 1902 in FIG. 19 may be implemented by the communication interface 404 in the communication apparatus 400 shown in FIG. 4a.

In another possible product form, the communication apparatus in this embodiment of this application may alternatively be implemented by using one or more field programmable gate arrays (field programmable gate array, FPGA), a programmable logic device (programmable logic device, PLD), a controller, a state machine, gate logic, a discrete hardware component, any other proper circuit, or any combination of circuits that can perform various functions described throughout this application.

In some embodiments, when the communication apparatus 190 in FIG. 19 is a chip or a chip system, a function/an implementation process of the transceiver module 1902 may be implemented by using an input/output interface (or a communication interface) of the chip or the chip system, and a function/an implementation process of the processing module 1901 may be implemented by using a processor (or a processing circuit) of the chip or the chip system.

Because the communication apparatus 190 provided in this embodiment may perform the foregoing methods, for technical effects that can be achieved by the communication apparatus 190, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be read from the memory directly or via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing described system, apparatus, and unit, refer to a corresponding process in the foregoing method embodiment. Details are not described herein again.

It may be understood that the system, apparatus, and method described in this application may alternatively be implemented in another manner. For example, the described apparatus embodiment is merely an example. For example, the division into the units is merely a logical function division and another division manner may be used in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, that is, may be located in one place, or may be distributed on a plurality of network units. Parts displayed as units may or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When implemented by using a software program, the embodiments may be implemented completely or partially in a form of a computer program product. The computer program product includes one or more computer instructions. When the computer program instructions are loaded and executed on a computer, all or a part of the procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. In embodiments of this application, the computer may include the foregoing apparatus.

Although this application is described herein with reference to embodiments, in a process of implementing this application that claims protection, a person skilled in the art may understand and implement other variations of the disclosed embodiments by viewing the accompanying drawings, disclosed content, and the accompanying claims. In the claims, "comprising" (comprising) does not exclude another component or step, and "a" or "an" does not exclude a plural case. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as covering any and all modifications, variations, combinations, or equivalents within the scope of this application. It is clear that a person skilled in the art can make various modifications and variations to this application without departing from the spirit and scope of this application. Therefore, this application is intended to cover these modifications and variations of this application provided that they fall within the scope of the claims of this application and their equivalent technologies.

## Claims

1. A resource indication method, wherein the method comprises:
determining, by a first communication device, a first sensing resource, wherein the first sensing resource comprises a time domain resource and a frequency domain resource that are used to carry a first sensing signal; and
sending, by the first communication device, a first sequence and the first sensing signal in a first time unit, wherein at least one of a time domain location feature, a frequency domain location feature, or a code domain feature of the first sequence indicates the first sensing resource.

2. The method according to claim 1, wherein the first time unit comprises X time subunits, and in the X time subunits:
start X1 time subunits are used for automatic gain control AGC, a part of or all time subunits in X2 time subunits after the X1 time subunits are used to carry the first sequence, a part of or all time subunits in X3 time subunits after the X2 time subunits are used to carry the first sensing signal, X1+X2+X3≤X, X1, X2, and X3 are positive integers, and X is a positive integer greater than or equal to 3.

3. The method according to claim 2, wherein the X3 time subunits comprise N1 second time subunit groups, N1 is a positive integer less than or equal to X3, and the time domain resource used to carry the first sensing signal comprises at least one of the N1 second time subunit groups.

4. The method according to claim 2 or 3, wherein the first sensing resource is located in a sensing resource pool, the sensing resource pool comprises M subchannels in frequency domain, and M is a positive integer greater than or equal to 1; and
the frequency domain resource used to carry the first sensing signal comprises a part of or all resource elements Res of at least one of the M subchannels.

5. The method according to claim 4, wherein in the X3 time subunits, a plurality of REs of each of the M subchannels comprise K1 first RE groups, one first RE group comprises REs that are evenly distributed based on a comb K1 in frequency domain, and K1 is a positive integer greater than or equal to 1; and
the frequency domain resource used to carry the first sensing signal comprises at least one first RE group in the at least one subchannel.

6. The method according to claim 4 or 5, wherein in a first time subunit group, each of the M subchannels comprises at least N3 first areas, each first area comprises at least K2*L REs, K2 is a comb used for the first sequence, L is a length of the first sequence, N3 is a positive integer greater than or equal to N1, and the first time subunit group comprises the part of or all the time subunits that are used to carry the first sequence in the X2 time subunits; and
the frequency domain location feature of the first sequence comprises an index of a first area in which the first sequence is located, or a quantity of times that the first sequence is repeatedly mapped in the at least N3 first areas, wherein a maximum quantity of times that the first sequence is mapped in one first area is 1.

7. The method according to claim 6, wherein an index of a second time subunit group in which the first sensing signal is located is the same as the index of the first area in which the first sequence is located; or
the index of the second time subunit group in which the first sensing signal is located is the same as the quantity of times that the first sequence is repeatedly mapped in the N3 first areas.

8. The method according to claim 6 or 7, wherein the plurality of REs of each of the at least N3 first areas comprise K2 second RE groups, and one second RE group comprises REs that are evenly distributed based on the comb K2 in frequency domain; and
the frequency domain location feature of the first sequence comprises an index of a second RE group in which the first sequence is located.

9. The method according to claim 8, wherein an index of a first RE group in which the first sensing signal is located is the same as the index of the second RE group in which the first sequence is located.

10. The method according to any one of claims 3 to 9, wherein the part of or all the time subunits that are used to carry the first sequence in the X2 time subunits comprise N2 third time subunit groups, and N2 is a positive integer less than or equal to X2; and
the time domain location feature of the first sequence comprises an index of a third time subunit group in which the first sequence is located.

11. The method according to claim 10, wherein the index of the second time subunit group in which the first sensing signal is located is the same as the index of the third time subunit group in which the first sequence is located.

12. The method according to any one of claims 3 to 11, wherein the code domain feature of the first sequence indicates the second time subunit group in which the first sensing signal is located.

13. The method according to any one of claims 1 to 12, wherein the code domain feature of the first sequence comprises at least one of the following:
an index of the first sequence, an index of a sequence group in which the first sequence is located, an index of a base sequence for generating the first sequence, an index of a cyclic shift for generating the first sequence, or an index of an orthogonal cover code OCC for generating the first sequence.

14. The method according to any one of claims 1 to 13, wherein the frequency domain location feature of the first sequence comprises a subchannel on which the first sequence is located.

15. The method according to any one of claims 1 to 14, wherein a subchannel on which the first sensing signal is located is the same as the subchannel on which the first sequence is located.

16. The method according to any one of claims 1 to 15, wherein the determining, by a first device, a first sensing resource comprises:
receiving, by the first communication device, a second sequence from a second communication device, wherein at least one of a time domain location feature, a frequency domain location feature, or a code domain feature of the second sequence indicates a second sensing resource, and the second sensing resource comprises a frequency domain resource and a time domain resource that are used to carry a second sensing signal; and
determining, by the first device, the first sensing resource based on the second sensing resource.

17. A resource selection method, wherein the method comprises:
receiving, by a third communication device, a first sequence from a first communication device, wherein at least one of a time domain location feature, a frequency domain location feature, or a code domain feature of the first sequence indicates a first sensing resource, and the first sensing resource comprises a frequency domain resource and a time domain resource that are used to carry a first sensing signal; and
determining, by the third communication device, a third sensing resource based on the first sensing resource, wherein the third sensing resource comprises a time domain resource and a frequency domain resource that are used to carry a third sensing signal.

18. The method according to claim 17, wherein the method further comprises:
sending, by the third communication device, a third sequence and the third sensing signal in a second time unit, wherein at least one of a time domain location feature, a frequency domain location feature, or a code domain feature of the third sequence indicates the third sensing resource.

19. The method according to claim 17 or 18, wherein the third sensing resource does not overlap the first sensing resource.

20. A communication apparatus, wherein the communication apparatus comprises a processor; and the processor is configured to run a computer program or instructions, to enable the communication apparatus to perform the method according to any one of claims 1 to 16, or enable the communication apparatus to perform the method according to any one of claims 17 to 19.

21. A computer-readable storage medium, wherein the computer-readable storage medium stores computer instructions or a program, and when the computer instructions or the program is run on a computer, the method according to any one of claims 1 to 16 or the method according to any one of claims 17 to 19 is performed.

22. A computer program product, wherein the computer program product comprises computer instructions; and when a part or all of the computer instructions are run on a computer, the method according to any one of claims 1 to 16 or the method according to any one of claims 17 to 19 is performed.
